# FASCICULE DE BREVET EUROPEEN

(11) **EP 4 610 626 B1**
(45) Date de publication et mention de la délivrance du brevet: **09.12.2026**
(21) Numéro de dépôt: 25159975.9
(22) Date de dépôt: 25.02.2025
(51) Int. Cl.: G01N 15/14, G01N 15/1433, G01N 15/1434, G01N 21/65

(54) **PROCÉDÉ DE REPÉRAGE ET D'IMAGERIE SPECTRALE DE MICROPARTICULES, ET SYSTÈME ASSOCIÉ**
VERFAHREN ZUR SPEKTRALEN MARKIERUNG UND ABBILDUNG VON MIKROPARTIKELN UND SYSTEM DAFÜR
METHOD FOR MICROPARTICLE REGISTRATION AND SPECTRAL IMAGING, AND SYSTEM THEREFOR

(30) Priorité: 27.02.2024 FR 2401923
(43) Date de publication de la demande: 03.09.2025
(73) Titulaire: Horiba France SAS, 91120 Palaiseau (FR)
(72) Inventeur: CANNESON, Damien, 59800 Lille (FR); FROIGNEUX, Emmanuel, 50480 Picauville (FR); LADEN, Sébastien, 59910 Bondues (FR)
(74) Mandataire: Jacobacci & Partners France

(56) Documents cités:
- WO-A1-2018/138098
- LIU SHAOCHUANG ET AL: "Rapid ultrasensitive monitoring the single-particle surface-enhanced Raman scattering (SERS) using a dark-field microspectroscopy assisted system", CHINESE CHEMICAL LETTERS, ELSEVIER, AMSTERDAM, NL, vol. 31, no. 2, 30 July 2019 (2019-07-30), pages 473 - 475, XP086008476, ISSN: 1001-8417, [retrieved on 20190730], DOI: 10.1016/J.CCLET.2019.07.057
- LIU SHAOCHUANG ET AL: "Supporting information: Rapid ultrasensitive monitoring the single-particle surface-enhanced Raman scattering (SERS) using a dark-field microspectroscopy assisted system", CHINESE CHEMICAL LETTERS, vol. 31, no. 2, 1 February 2020 (2020-02-01), AMSTERDAM, NL, pages 473 - 475, XP093196939, ISSN: 1001-8417, Retrieved from the Internet <URL:https://ars.els-cdn.com/content/image/1-s2.0-S1001841719304620-mmc1.pdf> DOI: 10.1016/j.cclet.2019.07.057

## Description

### DOMAINE TECHNIQUE

La présente invention concerne de manière générale le domaine technique de l'analyse de microparticules par imagerie spectrale.

Elle concerne plus particulièrement un procédé de repérage et d'imagerie spectrale de microparticules transparentes, ainsi qu'un système associé.

L'invention trouve une application particulièrement avantageuse dans le suivi et l'imagerie spectrale rapide de microparticules transparentes éparpillés au sein d'un échantillon de dimensions macroscopiques.

### ETAT DE LA TECHNIQUE

La détection et l'identification de la nature chimique de particules solides de taille micrométrique, communément dénommées microparticules, est un sujet d'intérêt pour de nombreuses industries et/ou applications. Par exemple, l'étude des microparticules de plastiques, qui consiste notamment à les détecter, les quantifier et les identifier, est primordiale dans des domaines tels que la science de l'environnement, l'industrie agro-alimentaire etc. Dans le cadre de telles études, un échantillon de taille macroscopique, s'étendant sur quelques millimètres carrés, voir quelques centimètres carrés, est prélevé dans un milieu, afin d'offrir un aperçu représentatif de ce milieu. Un tel échantillon peut par exemple se présenter sous forme liquide ou gazeuse, et comporter des microparticules solides en suspension, ou encore sous la forme d'une poudre de microparticules solides.

Des systèmes de mesure ont été développés afin de répondre à un tel besoin d'analyse. Il a ainsi été proposé des systèmes d'imagerie spectrale, associant une modalité d'imagerie par microscopie dite de plein champ, servant au repérage spatial des microparticules, à une modalité d'analyse spectrale, le plus souvent par analyse ponctuelle à l'aide d'une source laser afin d'enregistrer un spectre de chaque microparticule, cette analyse ponctuelle permettant de remonter à la composition chimique des microparticules analysées.

Cependant, le champ de vue image de tels systèmes d'imagerie spectrale demeure limité à des zones rectangulaires de quelques millimètres par quelques millimètres de côté, voire moins, lorsque des objectifs de microscope à fort grossissement sont employés, afin de résoudre spatialement les particules micrométriques à l'étude. Ainsi, parcourir l'entièreté de la surface de l'échantillon afin de repérer les microparticules nécessite un mosaïquage de l'échantillon, qui est alors déplacé à l'aide d'une platine, chaque tesselle ou tuile de la mosaïque étant de la taille du champ de vue image du système d'imagerie, dont les dimensions dépendent notamment de l'objectif de microscope et/ou du capteur d'image.

Suivant un procédé communément décrit comme statique, l'ensemble des tuiles d'une mosaïque représentatives d'un échantillon sont acquises par microscopie de plein champ, avant de procéder, dans un second temps à l'analyse ponctuelle par spectroscopie laser. Ainsi, l'échantillon est imagé en intégralité en premier lieu, avant de passer à son analyse spectrale.

Typiquement, un échantillon macroscopique nécessite l'acquisition et le traitement d'une mosaïque contenant quelques millions de tuiles. Une telle taille d'image nécessite une compression de la qualité d'image de la mosaïque afin de permettre son stockage en vue de l'extraction des coordonnées des différentes microparticules. Cette extraction est ensuite suivie d'une analyse ponctuelle par une acquisition spectrale sur les points de coordonnées extraites. Cette compression de la qualité de l'image est toutefois faite au détriment de la résolution spatiale.

Une approche dynamique a été proposée pour remédier à la détérioration de la résolution spatiale. Cette approche dynamique implique une extraction des coordonnées des microparticules, tuile par tuile, et l'acquisition de spectres à la volée, sur chacune des tuiles, avant de passer à la tuile suivante. Cette approche dynamique offre de multiples avantages, dont une réduction de la taille d'image, puisque seules les coordonnées d'intérêt sont conservées, plutôt qu'une tuile entière. Cependant, cette approche démultiplie les temps d'acquisition, lors du passage de la modalité d'imagerie à la modalité d'analyse spectrale pour chaque tuile.

Des solutions connues pour l'observation de particules uniques sont par exemples décrites dans Shaochuang Liu, Yilun Ying, Yitao Long. Rapid ultrasensitive monitoring the single-particle surface-enhanced Raman scattering (SERS) using a dark-field microspectroscopy assisted system[J]. Chin. Chem. Lett., 2020, 31(2): 473-475, tandis qu'une méthode de mesure par micro-spectrométrie est décrite dans WO 2018/138098 A1.

### PRESENTATION DE L'INVENTION

Afin de remédier aux inconvénients précités de l'état de la technique, la présente invention propose d'adapter l'approche dynamique afin de permettre à la fois le repérage et l'analyse spectrale de microparticules sans commutation d'une pièce mécanique motorisée, réduisant ainsi les temps d'acquisition.

Plus particulièrement, on propose selon l'invention un procédé de repérage spatial dans une image et d'analyse spectrale de microparticules dans un échantillon par un système de microscopie, le procédé comprenant les étapes suivantes :
A) illumination d'une zone de l'échantillon à l'aide d'un cône d'éclairage annulaire, le cône d'éclairage annulaire étant issu d'un faisceau de lumière blanche en partie réfléchi par un miroir annulaire et focalisé par une région périphérique d'un objectif de microscope champ sombre,
B) enregistrement d'une première image de microscopie en champ sombre sur un champ de vue inclus dans la zone de l'échantillon illuminée, la première image en champ en sombre étant collectée par une région centrale de l'objectif de microscope champ sombre,
C) repérage dans la première image en champ sombre des microparticules,
D) extraction des coordonnées des points correspondant à des microparticules au sein de l'image champ sombre enregistrée, de manière à former une liste de points,
E) déplacement de l'échantillon de manière à faire coïncider un axe optique de l'objectif de microscope champ sombre avec un point de la liste de points,
F) illumination d'un point de mesure sur l'échantillon à l'aide d'un faisceau laser excitateur transmis à travers le miroir annulaire et focalisé par la région centrale de l'objectif de microscope champ sombre, le point de mesure coïncidant avec le point de la liste de points,
G) collection d'un spectre Raman émis depuis le point de mesure, le spectre Raman étant collecté par la région centrale de l'objectif de microscope champ sombre.

Ainsi, grâce à l'invention, aucune commutation mécanique n'est nécessaire pour passer d'une modalité de microscopie à une autre dans le cadre d'une approche dynamique. Cette propriété est avantageuse pour des échantillons de grandes dimensions par rapport au champ de vue d'un microscope, dans le cadre d'une approche dynamique, telle que définie en introduction. Cette approche dynamique ayant été introduite afin notamment d'éviter de recourir à une compression de la résolution spatiale, compression nécessaire afin de traiter un volume de données important au vu de la taille des échantillons étudiés. Cependant, la nécessité de commuter une pièce mécanique motorisée au sein de chaque tuile, afin de procéder à l'acquisition d'une image en champ large puis à une acquisition de spectres ponctuels au sein de l'image, entraînait des temps morts incompressibles de l'ordre de 5 secondes par tuile. Ramenés à l'échelle d'échantillons millimétriques voire centimètres, ces temps morts représentent des heures. Grâce à l'invention, les avantages de l'approche dynamique, c'est-à-dire un positionnement précis à l'échelle des échantillons, une haute résolution spatiale ainsi qu'une mesure peu influencée par des variations environnementales, sont préservées, tout en s'affranchissant des temps de commutation mécaniques rédhibitoires. Cette suppression des temps de commutation mécanique lève ainsi un verrou important quant à l'utilisation de l'approche dynamique sur des échantillons, en particulier, des échantillons de grandes dimensions.

De plus, de par l'invention, la fiabilité mécanique du système s'en retrouve améliorée. En effet, les pièces mobiles sont d'éventuelles sources de désalignement, voire d'obsolescence du système.

La solution proposée permet non seulement de s'affranchir de ces temps morts, ce qui représente un gain de temps important et augmente la fiabilité du système, mais aussi combine avantageusement des propriétés des deux modalités choisies, la microscopie en champ sombre et la microspectrométrie Raman, aussi appelée microspectroscopie Raman. D'une part, il en résulte une solution sans commutation mécanique et sans pertes de signal, aux pertes optiques près, la totalité du signal Raman collecté en épi-détection arrivant jusqu'au spectromètre. D'autre part, l'étude d'échantillons de grande dimension comprenant des microparticules absorbant peu la lumière se retrouve facilitée.

D'autres caractéristiques avantageuses et non limitatives du procédé conforme à l'invention, prises individuellement ou selon toutes les combinaisons techniquement possibles, sont les suivantes :
- les étapes A) et F) sont exécutées simultanément, une zone est illuminée sur l'échantillon par la région périphérique de l'objectif de microscope champ sombre, tandis qu'un point de mesure au sein de la zone est illuminé par la région centrale de l'objectif de microscope champ sombre,
- le point de mesure est situé le long d'un axe optique de la région centrale de l'objectif de microscope champ sombre,
- un champ de dimensions supérieures au champ de vue image est reconstitué par une mosaïque d'images de microscopie en champ sombre, ces images de microscopie en champ sombre correspondant à des tuiles de la mosaïque,
- un positionnement de chaque tuile de la mosaïque est prédéfini en amont du procédé,
- les étapes E), F) et G) sont répétées jusqu'à avoir balayé tous les points de la liste de points extraite sur une tuile donnée, avant de procéder à une étape de déplacement de l'échantillon afin de centrer le champ de vue de l'objectif de microscope champ sombre sur une autre tuile de la mosaïque et reprendre le procédé depuis l'étape A), afin d'enregistrer une autre image de microscopie en champ sombre,
- pour chaque tuile de la mosaïque, la liste de points comporte un nombre fixé de points,
- un positionnement d'au moins une tuile de la mosaïque est établi en fonction des coordonnées d'un point de la liste de points,
- après le déplacement de l'étape E) pour faire coïncider l'axe optique de l'objectif de microscope champ sombre avec un point de la liste de points, les étapes A), B), C), D), F), et G) sont exécutées, une nouvelle image de microscopie en champ sombre, correspondant à une nouvelle tuile de la mosaïque, et un spectre Raman émis depuis le point de mesure, sont enregistrés, ces étapes étant suivies d'un autre déplacement de l'échantillon pour faire coïncider l'axe optique de l'objectif de microscope champ sombre avec un autre point de la liste de points,
- des points supplémentaires extraits de la nouvelle image de microscopie en champ sombre enregistrée après le déplacement de l'étape F), sont ajoutés à la liste de points à balayer.

L'invention concerne également un système de repérage spatial dans une image et d'analyse spectrale de microparticules, comprenant un microscope optique, une source laser, une source de lumière blanche, un capteur d'image, un spectromètre, et une unité de contrôle, celle-ci comprenant une unité de traitement d'images, le microscope optique comprenant un porte-échantillon monté sur une platine de déplacement, le porte-échantillon étant adapté pour recevoir un échantillon, le système étant caractérisé en ce qu'il comprend un système optique comprenant un miroir annulaire, un objectif de microscope champ sombre, le système optique étant disposé entre la source laser, la source de lumière blanche et le porte-échantillon, l'objectif de microscope champ sombre présentant une région centrale et une région périphérique,
- le miroir annulaire est configuré pour réfléchir une partie d'un faisceau de lumière blanche émis par la source de lumière blanche en direction de la région périphérique de l'objectif de microscope champ sombre, et transmettre un faisceau laser excitateur émis par la source laser en direction de la région centrale de l'objectif de microscope champ sombre,
- l'objectif de microscope champ sombre est adapté pour transmettre la partie du faisceau de lumière blanche à l'aide de sa région périphérique en direction du porte-échantillon et transmettre le faisceau laser excitateur via sa région centrale en direction du porte-échantillon,
- l'objectif de microscope champ sombre est adapté à focaliser la partie du faisceau lumineux afin d'illuminer une première zone d'un échantillon sur le porte-échantillon à l'aide d'un cône d'éclairage annulaire et l'objectif de microscope champ sombre est adapté à focaliser le faisceau laser excitateur sur un point de mesure compris dans la première zone,
- la région centrale de l'objectif de microscope champ sombre est adaptée à collecter une image de microscopie en champ sombre sur un champ de vue image inclus dans la première zone illuminée, l'image de microscopie en champ sombre étant enregistrée à l'aide du capteur d'image,
- l'unité de traitement d'image est adaptée à repérer des microparticules éventuelles, et à extraire de l'image de microscopie en champ sombre des coordonnées des points associés à ces microparticules, afin d'établir une liste de points,
- la platine de déplacement est configurée pour déplacer le porte-échantillon, afin de faire coïncider le point de mesure et un point de la liste de points ou afin de placer le champ de vue image de l'objectif de microscope champ sombre sur une autre zone au moins partiellement différente de la première zone,
- la région centrale de l'objectif de microscope champ sombre est également adaptée à collecter un spectre Raman généré depuis le point de mesure, le spectre Raman étant enregistré par un spectromètre Raman.

### DESCRIPTION DETAILLEE DE L'INVENTION

De plus, diverses autres caractéristiques de l'invention ressortent de la description annexée effectuée en référence aux dessins qui illustrent des formes, non limitatives, de réalisation de l'invention et où :
Figure 1 illustre schématiquement un système de microscopie optique adapté à mettre en œuvre un procédé de repérage spatial et d'analyse spectrale de microparticules dans un échantillon,
Figure 2 est un organigramme représentant un premier mode de réalisation du procédé de l'invention,
Figure 3 représente un exemple de mosaïque comprenant une pluralité de tuiles, chaque tuile correspondant à une image enregistrée suivant le procédé décrit en lien avec la figure 2,
Figure 4 est un organigramme représentant un second mode de réalisation du procédé de l'invention,
Figure 5 illustre le procédé décrit en lien avec la figure 4, et représente notamment un exemple d'enregistrement de plusieurs tuiles successives afin de former une mosaïque selon le second mode de réalisation,
Figure 6 représente une image de l'échantillon de la figure 3 ou 5, au sein duquel une position des microparticules est repérée pour certaines des microparticules comprises dans la mosaïque des figures 3 ou 5.

Il est à noter que sur ces figures les éléments structurels et/ou fonctionnels communs aux différentes variantes peuvent présenter les mêmes références.

Diverses autres modifications peuvent être apportées à l'invention dans le cadre des revendications annexées.

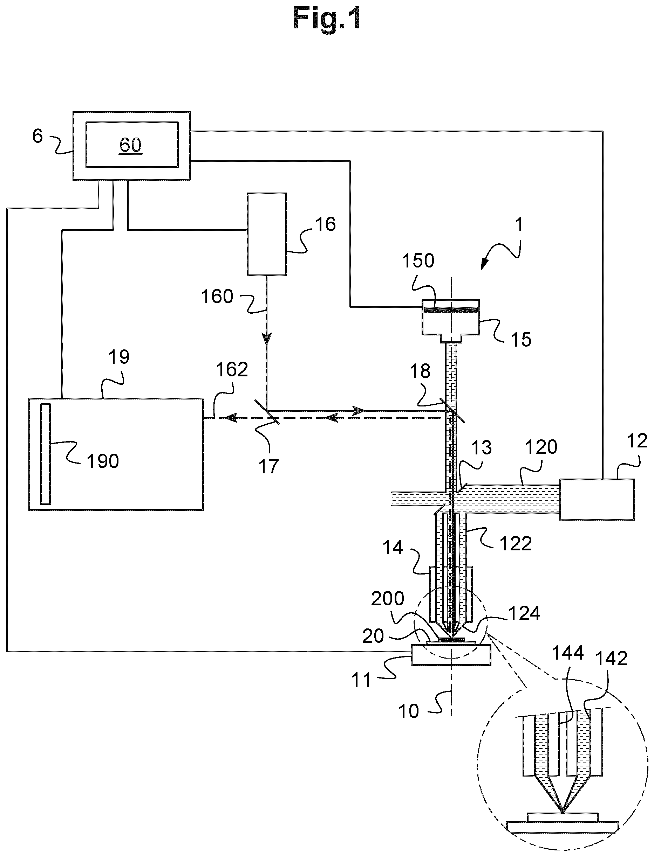

Il est représenté sur la figure 1, un système de repérage spatial dans une image et d'analyse spectrale de microparticules 1, basé sur un microscope optique, un capteur d'image 19, un système de traitement d'images 60 et un spectromètre 19 Raman. Un tel système est ici désigné par le terme système de microscopie optique et repose sur des interactions lumière-matière afin d'imager et/ou analyser un échantillon 200 présentant des structures de dimensions micrométriques. Ces structures se présentent notamment sous la forme de microparticules 202, c'est-à-dire une particule solide dont la taille est par exemple comprise entre quelques dixièmes de micromètres et quelques centaines de micromètres.

Ici, il est considéré des microparticules 202 de matière plastique i.e. des microparticules 202 de polymère, par exemple constitué de longues chaînes carbonées, et dérivé de combustibles fossiles. Néanmoins, le terme microparticule se réfère également, et de manière non-limitative, à des grains minéraux de taille micrométrique, ou encore à des grains de poudre pharmaceutique, ou des particules solides en suspension dans l'air.

Ces microparticules 202, sont comprises dans un échantillon 200 qui présente quant à lui des dimensions allant de quelques centaines de micromètres, à quelques dizaines de centimètres. L'échantillon 200 est par exemple de taille macroscopique, et comprend des microparticules 202 en suspension dans de l'eau ou dans l'air, ou encore prend la forme d'une poudre. Un tel échantillon 200 est par exemple prélevé dans un environnement à des fins d'analyse, et/ou investigations dans des domaines variés tels que l'industrie agro-alimentaire, l'industrie pharmaceutique, la géologie, les sciences de l'environnement, pour ne citer que quelques exemples. L'échantillon 200 prélevé est ici déposé sur un porte-échantillon 20, notamment une lame de microscope en verre, et éventuellement protégé par une lamelle de microscope.

Le système de repérage spatial dans une image et d'analyse spectrale de microparticules 1 schématisé dans la figure 1 est donc configuré pour étudier de tels échantillons 200, notamment en permettant d'imager les microparticules 202 contenues, et ainsi remonter à des informations morphologiques de ces microparticules 202. Il est par exemple possible de s'intéresser à une aire, un périmètre, une forme, etc..., de ces microparticules 202, via des images enregistrées à l'aide de ce système de microscopie optique 1. Par ailleurs, il est avantageux de compléter cette étude morphologique, par une étude quant à une composition chimique de chacune de ces microparticules 202, notamment via un enregistrement de spectres, par exemple, des spectres Raman ou des spectres de photoluminescence, qui sont caractéristiques de la composition chimique. Cependant, l'enregistrement de ces spectres caractéristiques utilise typiquement des méthodes de mesure ponctuelles.

Il est particulièrement avantageux dans le cadre d'étude sur des échantillons 200 de grande dimension, renfermant des microparticules 202, de procéder en amont à un repérage spatial de ces microparticules 202, notamment à partir d'une image de microscopie, et d'établir un spectre caractéristique sur des points repérés, le plus souvent, par une mesure ponctuelle sur un point de dimensions micrométriques. Il est ensuite possible de résoudre spatialement une information quant à une composition chimique de l'échantillon 200. Par grande dimension, il est ici sous-entendu que des dimensions de l'échantillons sont grandes devant des dimensions des microparticules 202, i.e., l'échantillon 200 considéré est de taille macroscopique, et s'étend sur quelques millimètres de côté ou de diamètre par exemple.

Ce repérage initial des points d'intérêt constitue un gain de temps, étant donné la faible dimension du point sur laquelle la mesure peut être effectuée par rapport aux dimensions totales de l'échantillon 200. Ceci est d'autant plus vrai dans le cas d'un échantillon 200 contenant une faible concentration de microparticules 202. Ainsi, l'enregistrement d'un spectre uniquement sur les points d'intérêt plutôt qu'une mesure ponctuelle sur chaque point de l'échantillon 200, réduit de manière avantageuse les temps d'acquisition, les temps de traitement ainsi qu'un espace mémoire nécessaire au stockage des spectres mesurés.

Le système de repérage spatial dans une image et d'analyse spectrale de microparticules 1 comprend donc au moins deux modalités de microscopie distinctes, chacune des modalités reposant sur un mécanisme de contraste, i.e. d'interaction lumière-matière et/ou une mise en œuvre d'un mécanisme d'interaction lumière-matière différents. Ici, dans la présente divulgation, il est avantageusement choisi une modalité de microscopie en champ sombre afin d'imager l'échantillon 200, associée à une modalité de microspectroscopie Raman, aussi parfois désignée sous le terme de microspectrométrie Raman.

La modalité de microscopie en champ sombre est configurée pour illuminer une surface de l'échantillon 200, et acquérir une image d'au moins une partie de cette surface illuminée. L'imagerie de microscopie en champ sombre, ou plus simplement l'imagerie en champ sombre, repose sur le mécanisme de contraste suivant : l'échantillon 200, et les structures qu'il comprend, comme par exemple les microparticules 202, sont éclairés de manière à ce que seuls des rayons lumineux déviés par l'échantillon 200 et des structures que présente cet échantillon 200, puissent être collectés par un objectif optique.

La microscopie en champ sombre est une modalité d'imagerie particulièrement adaptée à l'étude des microparticules 202, notamment des microparticules 202 de matière plastique. En effet, la microscopie en champ sombre est connue pour exacerber des contrastes sur des échantillons 200 transparents, i.e. qui n'absorbent que peu la lumière. Or, certaines matières plastiques, et notamment les microplastiques et/ou les grains de poudre minéraux ou pharmaceutiques sont connus pour être transparents, et présenter un contraste relativement faible lorsqu'ils sont illuminés à l'aide d'autres modalités d'imagerie, par exemple en éclairage champ clair.

Le système de repérage spatial dans une image et d'analyse spectrale de microparticules 1 comprend une deuxième modalité de microscopie correspondant à une modalité de microspectroscopie Raman. Cette modalité de microspectroscopie Raman sonde la composition chimique de l'échantillon 200 en un point de mesure, via l'enregistrement d'un spectre Raman émis depuis ce point de mesure suite à une excitation lumineuse focalisée sur ce point. Ce spectre Raman est obtenu par diffusion Raman, qui correspond à un phénomène de diffusion inélastique de la lumière, du fait d'un échange d'énergie avec le milieu sondé. Cette variation d'énergie est représentative des modes de vibrations moléculaires du milieu sondé au niveau du point de mesure. Le spectre Raman émis comporte donc des raies Raman. Ce spectre Raman est caractéristique d'une espèce chimique donnée, et sa mesure et son analyse permettent entre autres, de renseigner sur la composition chimique d'un milieu d'intérêt.

Ainsi, la modalité de microspectroscopie Raman permet avantageusement de cartographier ponctuellement, c'est-à-dire, en procédant à un balayage point par point du point de mesure, la composition chimique d'un échantillon 200, ici, plus particulièrement, la composition chimique des microparticules 202 contenues au sein de l'échantillon 200. Par exemple, il est possible de s'intéresser à une composition des microparticules 202 de matière plastique, dispersées au sein d'un échantillon 200 aqueux.

La mise en œuvre de chacune de ces modalités de microscopie est basée sur des moyens d'illumination distincts et/ou des moyens de collection d'un signal généré par l'interaction lumière-matière, que ce soit sous la forme d'une image ou d'un spectre.

Il est proposé dans la présente invention un système de repérage spatial dans une image et d'analyse spectrale de microparticules 1 au sein duquel les deux modalités de microscopie, c'est à dire, la modalité de microscopie en champ sombre et la modalité de microspectroscopie Raman, sont mises en œuvre simultanément, ou successivement, sans nécessiter une commutation mécanique entre les deux moyens d'illumination et/ou de détection distincts pour basculer d'une modalité à l'autre. En effet, la commutation mécanique usuellement proposée dans les systèmes de microscopie optique pour basculer d'une modalité de microscopie à une autre, est source de lenteur lors de l'utilisation du système. Bien que des solutions pour diminuer un temps nécessaire pour basculer entre deux modalités de microscopie existent, il demeure des problèmes liés au coût financier important de ces solutions de commutation rapide, leur éventuel désalignement, ainsi que leur durée de vie limitée, notamment liée à une obsolescence des moteurs pilotant de telles commutations mécaniques.

Il est également décrit un procédé d'analyse dynamique bénéficiant du système de repérage spatial dans une image et d'analyse spectrale de microparticules 1 tel que présentement divulgué, particulièrement approprié à l'imagerie et à l'analyse spectrale d'échantillon de grande dimension, i.e. de dimension macroscopique, comprenant des microparticules 202. En effet, afin d'imager de tels échantillons 200 dans leur intégralité, le nombre de commutations mécaniques nécessaires pour passer d'une modalité de microscopie à l'autre, pour repérer les microparticules 202 avant de procéder à leur analyse spectrale, se retrouve démultiplié du fait de la taille de l'échantillon 200. Grâce au procédé divulgué, l'analyse de ce type d'échantillon 200 se retrouve accéléré, tout en conservant une grande résolution spatiale, et en minimisant un espace mémoire nécessaire à l'enregistrement des données acquises.

On décrit en premier lieu le système de repérage spatial dans une image et d'analyse spectrale de microparticules 1, représenté sur la figure 1, et destiné à analyser un échantillon 200 tel que décrit précédemment. Dans un exemple, l'échantillon 200 est un échantillon comprenant une dispersion de microparticules 202, comme des grains minéraux, ou des microplastiques. Néanmoins, il peut également s'agir d'un échantillon comprenant une solution ou un liquide, par exemple aqueux, au sein duquel des microparticules 202 de matières plastiques sont dispersées. Dans tous les cas, cet échantillon 200 est déposé sur un porte-échantillon 20. Le système de microscopie optique comprend par exemple un statif de microscope, sur lequel les différents éléments décrits dans la suite sont agencés et fixés.

Un axe principal 10 du microscope est défini perpendiculaire à un plan de l'échantillon 200, qui est considéré comme plat.

Ce porte-échantillon 20 est solidaire d'une platine de déplacement 11 ou platine de positionnement. Celle-ci est adaptée à déplacer le porte-échantillon 20 selon au moins deux axes de translation, un axe x et un axe y, les axes x et y étant orthogonaux, et parallèles au plan principal de l'échantillon 200. Cette platine de déplacement 11, par exemple, une platine piézoélectrique est commandée par un contrôleur (non-représenté sur la figure 1), et est également motorisée, de manière à pouvoir automatiser des déplacements du porte-échantillon 20. La platine de déplacement 11 présente une amplitude de déplacement allant de quelques dizaines de millimètres à quelques centimètres, ainsi qu'une précision de déplacement de l'ordre du micromètre. Une unité de contrôle 6, par exemple, un ordinateur, pilote et synchronise les déplacements de la platine de déplacement 11.

### Modalité de microscopie en champ sombre

Afin d'illuminer l'échantillon 200 selon la modalité de microscopie en champ sombre, le système de repérage spatial dans une image et d'analyse spectrale de microparticules 1 comprend une source lumineuse. Par exemple, il s'agit d'une source lumineuse émettant un rayonnement lumineux incohérent, comme une lampe à incandescence, une lampe à incandescence halogène, ou encore une lampe comprenant au moins une diode électroluminescente, abrégé en « DEL » en français, ou LED, d'après la dénomination anglosaxonne *light-emitting diode.*

Il s'agit plus précisément dans ce premier mode de réalisation, d'une lampe à incandescence émettant ici un rayonnement lumineux présentant un spectre lumineux couvrant au moins partiellement le spectre visible. Un tel rayonnement lumineux est alors perçu comme proche du blanc, et on parle alors de source de lumière blanche 12.

Le rayonnement lumineux émis par la source de lumière blanche 12 se propage ici en espace libre, sous la forme d'un faisceau de lumière blanche 120, ce faisceau étant collimaté. Il est supposé que le faisceau de lumière blanche 120 se propage selon un axe optique perpendiculaire à l'axe principal 10 du microscope.

Le système de microscopie optique comprend également un miroir annulaire 13. Ce miroir annulaire 13 présente une surface plane réfléchissante, par exemple, un dépôt métallique poli sur une surface plane. Il s'agit ici par exemple d'un dépôt d'argent. Ce miroir annulaire 13 présente une forme elliptique, qui est percée en son centre par une ouverture centrale de forme elliptique. Dit autrement, le miroir annulaire 13 présente une forme d'anneau elliptique. L'ouverture est centrée sur la surface du miroir annulaire 13. Par conséquent, une partie centrale de ce miroir annulaire 13 ne réfléchit pas la lumière. Ce miroir annulaire 13 est par exemple inclus dans un bloc ou cube, typiquement connu sous le terme anglais de *dark field cube,* traduisible littéralement par cube champ sombre.

Une position de ce miroir annulaire 13 est maintenue fixe par rapport au statif de microscope.

Ce miroir annulaire 13 est agencé de sorte à être d'une part, centré par rapport à l'axe principal 10 du système de microscopie optique, et d'autre part centré par rapport au faisceau de lumière blanche 120. De plus, la surface plane réfléchissante du miroir annulaire 13 forme un angle de 45 degrés avec l'axe principal 10 du système de microscopie. Le miroir annulaire 13 est ainsi adapté à réfléchir une partie du faisceau de lumière blanche 122 en direction de l'échantillon 200.

En effet, si le faisceau de lumière blanche 120 est initialement approximé comme un cylindre plein, seule une portion correspondant à un cylindre creux est réfléchie en direction de l'échantillon 200. Cette portion correspond à une partie du faisceau de lumière blanche 122 incidente sur la surface plane réfléchissante du miroir annulaire 13.

Une portion restante est transmise à travers l'ouverture centrale de forme elliptique du miroir annulaire 13, par exemple en direction d'un bloqueur de faisceau, non représenté sur la figure 1.

La partie du faisceau de lumière blanche 122 correspondant au cylindre creux se propage selon l'axe principal 10 du système de microscopie optique, en direction de l'échantillon 200.

Le système de microscopie optique inclut également un objectif de microscope champ sombre 14, tel que connu dans l'état de la technique. Un tel objectif présente deux régions optiques distinctes, une région périphérique 142 et une région centrale 144. Un axe optique de l'objectif de microscope champ sombre 14 est aligné avec l'axe principal 10 du système de microscopie.

Ici, dans le mode de réalisation décrit, l'objectif de microscope champ sombre 14 correspond à un objectif de grossissement 50x, et d'ouverture numérique de 0,60. Un champ de vue, (appelé *field of view* en anglais) de l'objectif de microscope champ sombre 14 est de 0,44 millimètres de diamètre. Il s'agit de plus d'un objectif corrigé à l'infini.

La région périphérique 142 de l'objectif de microscope champ sombre 14, correspond à une région externe, entourant la région centrale 144. La région centrale 144 correspond quant à elle à un objectif de microscope classique. Ainsi, la région centrale 144 est centrée autour de l'axe optique de l'objectif de microscope champ sombre 14, entourée de la région périphérique 142.

La partie du faisceau de lumière blanche 122 correspondant au cylindre creux est transmise à travers la région périphérique 142 de l'objectif de microscope champ sombre 14. Des dimensions du cylindre creux, ainsi que du miroir annulaire 13 sont choisies en fonction des dimensions de la région périphérique 142. Il est notamment fait en sorte que l'intégralité de la partie du faisceau de lumière blanche 122 réfléchie par le miroir annulaire 13 soit transmise à travers la région périphérique 142 de l'objectif de microscope champ sombre 14.

Cette région périphérique 142 débouche sur un élément optique en anneau, qui focalise le cylindre creux en un cône d'éclairage annulaire 124. Cet élément optique correspond à par exemple à une lentille optique en anneau, ou à un miroir concave. C'est à l'aide de ce cône d'éclairage annulaire 124, correspondant à un cône creux, que l'échantillon 200 est illuminé dans la modalité de microscopie champ sombre. L'échantillon 200 est ainsi éclairé à l'aide de rayons lumineux présentant une forte obliquité par rapport à l'axe principal 10 du système de microscopie optique, c'est-à-dire des rayons lumineux présentant un grand angle d'inclinaison par rapport à l'axe principal 10 du système de microscopie optique. Un angle d'inclinaison des rayons lumineux est choisi pour que ces rayons ne puissent pas être collectés par la région centrale 144 de l'objectif de microscope champ sombre 14. Ici, l'angle d'inclinaison prend des valeurs supérieures ou égales à 37 degrés par rapport à l'axe optique de l'objectif de microscope champ sombre 14.

Une zone de l'échantillon 200 est donc illuminée. Cette zone s'étend parallèlement au plan de l'échantillon 200, et une dimension, notamment un diamètre, de cette zone illuminée, est déterminée en fonction des propriétés de l'objectif de microscope champ sombre 14, comme par exemple, son grossissement, son ouverture numérique.

Ici, il est considéré une zone illuminée présentant une dimension circulaire d'un diamètre allant de quelques microns, à quelques centaines de microns. Ici, par exemple, il est considéré une zone illuminée circulaire d'au moins d'au moins 100 microns de diamètre, voire, d'au moins 140 microns de diamètre, voire d'au moins 150 microns de diamètre. Cette zone illuminée circulaire présente des dimensions, ici un diamètre, supérieures à des dimensions d'une image enregistrée par la suite.

En fonction de l'objectif de microscope champ sombre 14 utilisé dans le premier mode de réalisation, la zone illuminée correspond à une zone circulaire d'une étendue de l'ordre de quelques dizaines, voire quelques centaines de micromètres. Par exemple, la zone illuminée correspond à une zone circulaire d'un diamètre de 440 micromètres.

L'échantillon 200, et notamment les structures qu'il contient, ici, des microparticules 202, et plus spécifiquement, des microparticules 202 de matières plastiques et/ou des microparticules 202 minérales, diffuse une partie des rayons lumineux obliques du cône d'éclairage annulaire 124. Seuls des rayons lumineux déviés par les structures de l'échantillon 200 sont collectés par la région centrale 144 de l'objectif de microscope champ sombre 14, selon le mécanisme de contraste connu de la microscopie champ sombre. Ainsi, seules les structures qui dévient au moins partiellement la lumière incidente produisent un contraste, et contribuent à une image de microscopie en champ sombre. La région centrale 144 de l'objectif de microscope champ sombre 14 se comporte comme un objectif de microscopie classique, et se caractérise par un grossissement et une ouverture numérique, comme décrit précédemment.

Les rayons lumineux déviés par les microparticules 202 sont donc collectés par la région centrale 144 de l'objectif de microscope champ sombre 14. D'un point de vue spectral, ces rayons lumineux déviés présentent un spectre identique à un spectre du faisceau de lumière blanche 120, puisque le mécanisme de contraste repose sur un phénomène de diffusion élastique.

Les rayons lumineux déviés émergent de l'objectif de microscope champ sombre 14 en étant collimatés, puisqu'un objectif corrigé à l'infini est utilisé dans le cadre de ce premier mode de réalisation. Ces rayons lumineux déviés se propagent ensuite en espace libre le long de l'axe principal 10 du système de microscopie optique, et passent notamment à travers l'ouverture formée au sein du miroir annulaire 13.

Un capteur d'image 15 image ensuite les rayons lumineux déviés. Ce capteur d'image 15 a un axe optique qui est aligné avec l'axe principal 10 du système de microscopie optique, et donc par extension, avec l'axe optique de l'objectif de microscope champ sombre 14.

Le capteur d'image 15 comprend un système optique d'imagerie et un capteur matriciel photosensible 150, cet ensemble étant fréquemment désigné sous le terme de caméra. Le système optique d'imagerie est adapté à faire une image de l'échantillon 200 sur le capteur matriciel photosensible 150. Le capteur matriciel photosensible 150 comprend une matrice, ici rectangulaire, de pixels sensibles à la lumière, et capable de convertir une information lumineuse en une charge électrique accumulée. Il s'agit par exemple d'un capteur CCD ou d'un capteur CMOS.

Le capteur d'image 15 est adapté à enregistrer une image de microscopie en champ sombre correspondant à au moins une partie de la zone illuminée en champ sombre, en imageant les rayons lumineux déviés sur le capteur matriciel photosensible. Le capteur d'image 15 possède un champ de vue, dépendant entre autres d'un grossissement du système optique d'imagerie du capteur d'image 15, ainsi que des dimensions de la matrice rectangulaire de pixels. Ce champ de vue du capteur d'image 15, ainsi que le champ de vue de la région centrale 144 de l'objectif de microscope champ sombre 14, limite une région de l'échantillon 200 qui peut être imagée dans la modalité de microscopie en champ sombre. Cette région imagée est désignée sous le terme de champ de vue image.

Le champ de vue image étant compris dans la zone illuminée, il présente donc des dimensions inférieures aux dimensions de la zone illuminée.

L'image de microscopie en champ sombre reproduit la région de l'échantillon 200 tel que décrite précédemment, et le contraste au sein de cette image de microscopie en champ sombre représente les structures, i.e., les microparticules 202, comme par exemple des microparticules de matière plastique, ou des grains de minéraux, capables de dévier des rayons lumineux incidents.

Cette image de microscopie en champ sombre présente une forme le plus souvent rectangulaire, du fait de la forme rectangulaire du capteur matriciel photosensible 150.

Chaque image de microscopie en champ sombre représente par exemple, une région de 140 par 105 microns sur l'échantillon 200.

Une unité de traitement d'image 60, représentée sur la figure 1, et comprise par exemple dans l'unité de contrôle 6, ici, un ordinateur, et est configurée pour échanger des informations avec le capteur d'image 15. Cette unité de traitement d'images 60 est également adaptée à identifier et à extraire de l'image de microscopie en champ sombre des coordonnées de points susceptibles de correspondre à des microparticules 202. Plus particulièrement, des microparticules 202 présentant un diamètre minimum de 0,5 micromètres sont repérées spatialement, et des paramètres morphologiques en sont extraites. Ce diamètre minimum dépend notamment des performances optiques, i.e. les performances d'imagerie du système. Il n'y a pas de limite supérieure au diamètre que présente les microparticules 202 détectables.

L'unité de traitement d'images 60 est également configurée pour échanger avec un utilisateur via l'intermédiaire d'une interface intégrée dans un logiciel. L'utilisateur a alors la possibilité de filtrer certaines microparticules 202 d'intérêt sur la base de critères spécifiques, comme les paramètres morphologiques. Par exemple, l'utilisateur peut choisir de conserver uniquement les microparticules 202 présentant un diamètre compris entre deux bornes de valeurs.

Cette identification et cette extraction est faite à l'aide d'un algorithme de traitement d'image dédié, ou encore par le biais, d'un algorithme d'apprentissage automatique, ou apprentissage machine, traduit depuis l'anglais *machine learning,* comme connu de l'état de la technique. En variante, l'identification et l'extraction des coordonnées de points d'intérêt au sein de chaque image de microscopie en champ sombre est faite manuellement ou en partie manuellement par un utilisateur du système de microscopie optique.

### Modalité de microspectroscopie Raman

La modalité de microspectroscopie Raman est également représentée sur la figure 1.

De manière avantageuse, cette modalité de microspectroscopie Raman est opérable sans commutation d'un élément mécanique pour basculer d'une modalité à l'autre, et peut ainsi être mise en oeuvre simultanément à la modalité de microscopie en champ sombre.

Le système de microscopie optique comprend une source laser 16. Cette source laser 16 émet un faisceau laser excitateur 160, qui est ici continu. Le faisceau laser excitateur 160 est de plus ici collimaté en sortie de la source laser 16.

De manière non-limitative, cette source laser 16 correspond par exemple à un laser à l'état solide pompé par diode, connu sous le terme *diode-pumped solid state laser* en anglais.

Pour la modalité de microspectroscopie Raman, le faisceau laser excitateur 160 est monochromatique, et présente par exemple une longueur d'onde choisie dans une fenêtre spectrale comprise entre 380 nanomètres et 1064 nanomètres. Par exemple, il s'agit ici d'un faisceau laser excitateur 160 présentant une longueur d'onde de 532 nanomètres.

En sortie de la source laser 16, ce faisceau laser excitateur 160 se propage selon un axe optique du faisceau, l'axe optique du faisceau laser étant ici initialement parallèle à l'axe principal 10 du système de microscopie optique. Un premier filtre dichroïque 17, également connu dans l'état de la technique sous le terme anglo-saxon de *edge filter,* ou filtre de bord, réfléchit le faisceau laser excitateur 160 de sorte que l'axe optique du faisceau laser soit perpendiculaire à l'axe principal 10 du système de microscopie optique.

Ce premier filtre dichroïque 17 correspond plus exactement à un filtre passe-haut. Un tel filtre est adapté à réfléchir une plage spectrale de longueurs d'onde inférieure à une longueur d'onde de coupure et à transmettre une autre plage spectrale de longueur d'onde distincte, qui est cette fois supérieure à la longueur d'onde de coupure. La longueur d'onde de coupure est choisie en fonction de la longueur d'onde du faisceau laser excitateur 160, ici, de manière à réfléchir le faisceau laser excitateur 160. Le premier filtre dichroïque 17 possède par exemple une longueur d'onde de coupure établie à 532,85 nanomètres par le constructeur.

Puisqu'il correspond à filtre de bord, ou *edge filter* ou aussi connu sous le terme de filtre laser, une courbe de la transmission en fonction de la longueur d'onde de ce premier filtre dichroïque 17 présente une zone de transition très réduite entre les longueurs d'onde transmises et les longues d'ondes réfléchies. Dit autrement, la courbe de transmission du premier filtre dichroïque présente une pente considérée comme raide au niveau de sa longueur d'onde de coupure. Dans ce cas, une transition entre les longueurs d'onde transmise et les longueurs d'onde réfléchie s'opère sur quelques nanomètres autour de la longueur d'onde de coupure. Par exemple, la transition s'opère sur une largeur inférieure ou égale à 10 nanomètres autour de la longueur d'onde de coupure, plus idéalement sur une largeur inférieure ou égale à 5 nanomètres autour de la longueur d'onde de coupure, voire une largeur inférieure ou égale à 3 nanomètres autour de la longueur d'onde de coupure.

Le système de microscopie optique comprend également un second filtre dichroïque 18.

Ce second filtre dichroïque 18 est adapté à réfléchir une plage spectrale de longueur d'onde supérieure à une longueur d'onde de coupure, et à transmettre une autre plage spectrale de longueur d'onde distincte. Il s'agit donc d'un filtre dichroïque de type passe-bas.

Ici, la longueur d'onde de coupure est choisie inférieure à la longueur d'onde du faisceau laser excitateur 160, c'est-à-dire inférieure strictement à 532 nanomètres. Plus précisément, le second filtre dichroïque 18 possède une longueur d'onde de coupure égale à 495 nanomètres. Ainsi, le faisceau laser excitateur 160 est réfléchi par le second filtre dichroïque.

Ce second filtre dichroïque 18 est également choisi de sorte à transmettre au moins une partie du spectre lumineux du faisceau de lumière blanche 120. De manière avantageuse, selon un mode de réalisation, le spectre lumineux du faisceau de lumière blanche 120 est intégralement transmis par le second filtre dichroïque 18.

Ce second filtre dichroïque 18 est placé de manière centrée sur l'axe principal 10 du système de microscopie optique entre le miroir annulaire 13 et le capteur d'image 15. Il est également centré par rapport à l'axe optique du faisceau laser excitateur 160. Une surface du second filtre dichroïque 18 est orienté à 45 degrés par rapport à l'axe optique du faisceau laser, de manière à réfléchir le faisceau laser excitateur 160 le long de l'axe principal 10 du système de microscopie optique, en direction de l'ouverture annulaire formée au sein du miroir annulaire 13.

Le faisceau laser excitateur 160 est ensuite transmis à travers le trou du miroir annulaire 13, le long de l'axe principal 10 du système de microscopie optique, en direction de l'échantillon 200.

La région centrale 144 de l'objectif de microscope champ sombre 14, qui est centrée autour de l'axe principal 10 du système de microscopie optique, transmet le faisceau laser excitateur 160 de la modalité de microspectroscopie Raman, avant de focaliser ce faisceau laser excitateur 160 en un point de mesure ponctuel sur l'échantillon 200.

Ce point de mesure est centré sur l'axe optique de l'objectif de microscope champ sombre 14, qui est confondu avec l'axe principal 10 du système de microscopie optique. Ce point est par exemple confondu avec un milieu géométrique de la zone illuminée en microscopie de champ sombre.

Ce point de mesure a une étendue dans le plan xy définie en fonction des propriétés de l'objectif de microscope champ sombre 14, comme notamment son ouverture numérique, ainsi que de la longueur d'onde du faisceau laser excitateur 160.

Usuellement, l'étendue du point de mesure varie entre quelques centaines de nanomètres, à quelques micromètres. Ici, par exemple, étant donné l'ouverture numérique de l'objectif de microscope champ sombre 14, ainsi que la longueur d'onde du faisceau laser excitateur 160, le point de mesure sonde un point de 564 nanomètres environ de diamètre sur l'échantillon 200.

Par effet Raman, l'échantillon 200 émet un spectre Raman, associé à un rayonnement lumineux diffusé inélastiquement. On s'intéresse ici au rayonnement lumineux Stokes, correspondant aux rayonnements lumineux dont la longueur d'onde est supérieure ou égale à la longueur d'onde du faisceau laser excitateur 160.

Ce rayonnement lumineux correspond au spectre Raman émis depuis le point de mesure sur lequel le faisceau laser excitateur 160 est focalisé. Ce spectre Raman comporte notamment des raies Raman, propres à la composition chimique de ce point de mesure. Afin d'accéder à cette information spectrale, le rayonnement lumineux diffusé est analysé.

Ainsi, le spectre Raman, sous la forme d'un rayonnement lumineux diffusé, est collecté par la région centrale 144 de l'objectif de microscope champ sombre 14, qui collimate ce rayonnement lumineux diffusé, en un faisceau lumineux, dit faisceau Raman 162. Ce faisceau Raman 162 est accompagné d'un faisceau correspondant aux rayonnements lumineux diffusés élastiquement par diffusion de Rayleigh. Ce faisceau présente la même longueur d'onde que le faisceau laser excitateur 160. Ce faisceau est désigné dans la suite de la description sous le terme de faisceau Rayleigh.

Le faisceau Raman 162 et le faisceau Rayleigh se propagent le long de l'axe principal 10 du système de microscopie optique, en direction du trou dans le miroir annulaire 13.

Le faisceau Raman 162, le faisceau Rayleigh et le faisceau laser excitateur 160 sont donc spatialement confondus, étant colinéaires les uns aux autres. Néanmoins, le faisceau Raman 162 et le faisceau Rayleigh sont contrapropageants par rapport au faisceau laser excitateur 160, c'est-à-dire qu'ils se propagent selon des directions opposées l'un par rapport à l'autre.

Ainsi, le faisceau Raman 162 et le faisceau laser excitateur 160 partagent un chemin optique identique entre l'échantillon 200 et le premier filtre dichroïque 17.

L'ouverture au centre du miroir annulaire 13 laisse donc passer le faisceau Raman 162 et le faisceau Rayleigh collectés et collimatés par la région centrale 144 de l'objectif de microscope champ sombre 14.

Le faisceau Raman 162 et le faisceau Rayleigh poursuivent leur propagation jusqu'au second filtre dichroïque 18. Etant donné le faisceau Raman 162 correspond au rayonnement lumineux Stokes, de longueur d'onde supérieure ou égale à la longueur d'onde du faisceau laser excitateur 160, et donc strictement supérieure à la longueur d'onde de coupure du second filtre dichroïque 18, le faisceau Raman 162 est donc réfléchi, de manière à former un angle à 90 degrés par rapport à l'axe principal 10 du système de microscopie optique. Il en va de même pour faisceau Rayleigh, à la même longueur d'onde que le faisceau laser excitateur 160.

Le faisceau Raman 162 et le faisceau Rayleigh se propagent donc le long de l'axe optique du faisceau laser excitateur 160 jusqu'au premier filtre dichroïque 17.

Le premier filtre dichroïque 17 transmet le faisceau Raman 162, en direction d'un spectromètre 19 Raman compris dans le système de microscopie optique, et réfléchit le faisceau Rayleigh. En effet, ce premier filtre dichroïque 17 est configuré pour réfléchir les longueurs d'onde inférieure ou égale à la longueur d'onde de coupure, choisie égale à celle faisceau laser excitateur 160, tout en transmettant les longueurs d'onde qui lui sont supérieures.

Le faisceau Raman 162 est donc analysé spectralement par le spectromètre 19. Un tel spectromètre 19 comprend notamment un élément dispersif, c'est-à-dire un élément optique adapté à décomposer spectralement la lumière en composantes spectrales monochromatique, tel qu'un prisme ou un réseau de diffraction, ainsi qu'un capteur matriciel photosensible 190, tel qu'un capteur CCD ou un capteur CMOS.

L'analyse spectrale du faisceau Raman 162 par un spectromètre 19 permet de remonter au spectre Raman issu du point de mesure sur lequel le faisceau laser excitateur 160 a été focalisé par la région centrale 144 de l'objectif de microscope champ sombre 14.

Ainsi, dans le mode de réalisation présentement divulgué pour le système de microscopie optique bi-modale c'est-à-dire alliant ici une modalité de microscopie en champ sombre pour l'imagerie, avec une modalité de microspectroscopie Raman, les deux modalités peuvent être mise en œuvre simultanément, sans commutation mécanique pour passer d'une modalité d'illumination à une autre.

Selon une première variante, afin de mettre en oeuvre les deux modalités de manière simultanée, des plages de longueurs d'onde disjointes sont choisies pour le spectre lumineux du faisceau de lumière blanche 120 et la longueur d'onde du faisceau laser excitateur 160. Notamment, afin de dissocier le faisceau Raman 162 issu de la modalité de microspectroscopie Raman, des rayons lumineux déviés issus de la modalité de microscopie en champ sombre, le spectre lumineux du faisceau de lumière blanche 120 est par exemple choisi strictement inférieur à la longueur d'onde du faisceau laser excitateur 160. Notamment, un filtre passe-bas placé entre la source de lumière blanche 12 et le miroir annulaire 13 élimine les longueurs d'onde indésirables. De manière alternative, un rayonnement monochromatique, de longueur d'onde strictement inférieure à la longueur d'onde du faisceau laser excitateur 160 est choisi afin de faire office de lumière blanche. Ici, dans le mode de réalisation représenté sur la figure 1, il est considéré que les plages de longueurs d'ondes couvertes par la source laser 16 et par la source de lumière blanche 12 sont disjointes. Il est par ailleurs considéré que la plage de longueurs d'ondes couverte par la source de lumière blanche 12 est strictement inférieure à la longueur d'onde du faisceau laser excitateur 160.

A l'inverse, selon une seconde variante, les deux modalités peuvent aussi être mise en oeuvre de manière alternée, c'est-à-dire, l'une à suite de l'autre, en contrôlant une alimentation d'une ou des deux sources, i.e. source laser 16 et source de lumière blanche 12. Ainsi, il est possible de sélectivement couper une des sources au profit de l'autre de manière rapide, par rapport aux temps de commutations usuellement connu dans l'état de la technique. Dans ce cas, le choix des plages spectrales couvertes par chacune des deux sources est laissée libre.

### Procédé dynamique

Un tel système de microscopie optique trouve une application particulièrement avantageuse dans la mise en oeuvre d'un procédé de repérage spatial et d'analyse spectrale dynamique de microparticules 202 tel que décrit ci-dessous. Pour rappel, dans une telle approche dynamique, plutôt qu'imager l'échantillon 200 dans son intégralité, avant de procéder à une analyse spectrale comme c'est le cas dans une approche statique, seule une partie de l'échantillon 200 est imagée, avant de procéder à l'analyse spectrale, au sein de la partie imagée. Ces deux étapes sont répétées jusqu'à obtenir une représentation de l'échantillon 200 dans son ensemble.

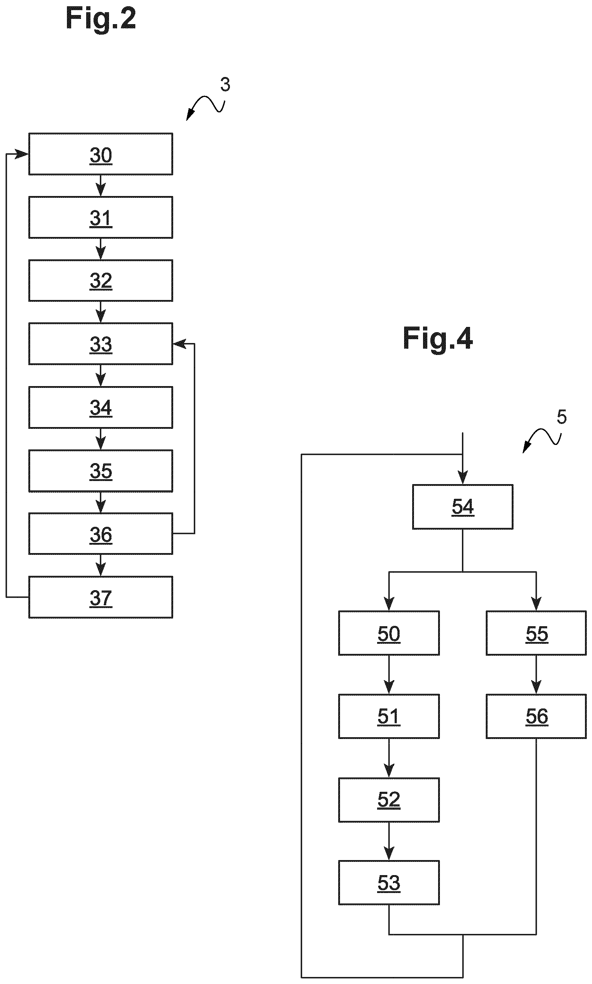

Un premier mode de réalisation d'un tel procédé est décrit par un premier organigramme 3 représenté sur la figure 2.

Le procédé comprend les étapes suivantes dans son premier mode de réalisation, ces étapes sont détaillées à l'aide d'un exemple, dans la suite de la description :
- illumination 30 d'une zone sur l'échantillon 200 à l'aide de la modalité de microscopie en champ sombre,
- enregistrement 31 d'une image de microscopie en champ sombre,
- repérage 32 au sein de l'image, des microparticules 202,
- extraction 33 des coordonnées des points correspondant à ces microparticules 202, afin de former une liste,
- déplacement 34 de l'échantillon 200, afin de faire correspondre la région centrale 144 de l'objectif de microscope champ sombre 14, avec un point de la liste de coordonnées extraite,
- illumination 35 de l'échantillon 200 à l'aide de la modalité de microspectroscopie Raman, le faisceau laser excitateur 160 étant focalisé en un point de mesure qui coïncide avec le point de l'étape précédente,
- collection 36 du spectre Raman, émis depuis le point de mesure, par la région centrale 144 de l'objectif de microscope champ sombre 14.

Les étapes de déplacement 34, d'illumination 35 et de collection 36 sont ensuite éventuellement répétées, par exemple jusqu'à avoir balayé i.e. parcouru l'ensemble des points de la liste. Une nouvelle étape de déplacement 37 déplace alors l'échantillon 200 afin de reprendre le procédé à partir de l'illumination 30, d'une nouvelle zone en champ sombre, au moins partiellement distincte de la zone précédente.

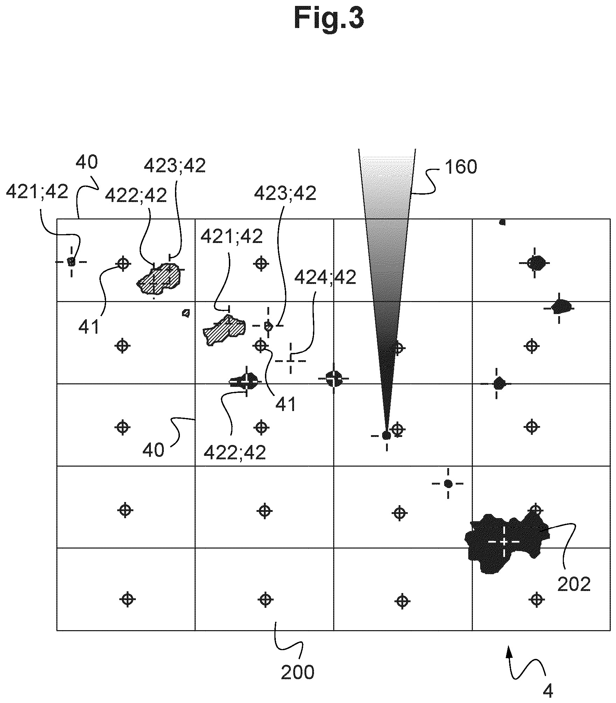

Une application de ce premier mode de réalisation du procédé est illustrée sur la figure 3.

Dans ce premier mode de réalisation, une mosaïque 4 représentative de l'échantillon 200 est reconstituée à l'aide d'une pluralité d'images de microscopie en champ sombre. La mosaïque 4 représente un champ de dimension supérieure au champ de vue image, grâce à un assemblage de plusieurs images de microscopie en champ sombre couvrant des zones au moins partiellement disjointes sur l'échantillon 200. Ici, il est considéré des images de microscopie en champ sombre couvrant des zones totalement disjointes. Idéalement, la mosaïque 4 représente l'intégralité de la surface de l'échantillon 200.

Chacune des images de la pluralité d'images de microscopie en champ sombre est ici désignée comme une tuile 40, c'est-à-dire à une zone de l'échantillon 200 s'étendant dans le plan xy. Ainsi, chacune des tuiles 40 est au moins partiellement disjointe des autres tuiles 40 que comprend la mosaïque 4. Ici, chacune des tuiles 40 est supposée totalement disjointe des autres. La taille de chacune des tuiles 40 est ici identique, et définie par le champ de vue du capteur d'image 15, ce champ de vue image étant inclus dans la zone de l'échantillon 200 illuminée.

Ainsi, d'après les caractéristiques du capteur d'image 10 et de l'objectif de microscope champ sombre 14, chaque tuile 40 a une forme rectangulaire de 140 micromètres par 105 micromètres.

Sur la figure 3, les tuiles 40 formant la mosaïque 4, sont disposées selon une grille rectangulaire, où chacune des tuiles 40 sont adjacentes les unes aux autres.

Dans le premier mode de réalisation, une position de chaque tuile 40 de la mosaïque 4 est prédéfinie en amont de l'exécution du procédé par rapport à un système de coordonnées. Ce système de coordonnées est par exemple représenté par la platine de déplacement 11, qui est solidaire du porte-échantillon 20 et donc de l'échantillon 200. Ainsi, le système de coordonnées établi par la platine de déplacement 11 repère également des points sur l'échantillon 200.

Ainsi, chacune des tuiles 40 est repéré par une paire de coordonnées selon l'axe x et selon l'axe y dans le système de coordonnées. Cette paire de coordonnées, notée (xᵢ, yᵢ) positionne un centre géométrique 41 de la tuile 40 par rapport à l'échantillon 200. Le centre géométrique 41 de la tuile 40 désigne ici un point d'intersection des diagonales de la tuile 40, celle-ci présentant une forme rectangulaire. Ce centre géométrique 41 est représenté pour chacune des tuiles 40 sur la figure 3, par une cible, c'est-à-dire une croix et un cercle.

De manière alternative, chaque tuile 40 peut également être repérée grâce à un de ses coins.

Dans le premier mode de réalisation, un ensemble de paires de coordonnées pour chacune des tuiles 40 est préétabli en amont, c'est-à-dire avant la mise en œuvre du procédé de repérage spatial et d'imagerie spectrale de microparticules 202 présentement divulgué. Chaque tuile 40 occupe une étendue spatiale prédéfinie sur l'échantillon 200.

Ici, à des fins d'illustration, seule une portion de la mosaïque 4 reconstruite sur l'échantillon, est représentée sur la figure 3.

La portion de la mosaïque 4 représentée sur la figure 3 comprend vingt tuiles 40, chacune des tuiles 40 ayant une dimension 140 micromètres par 105 micromètres.

Usuellement, les échantillons 200 considérés ont des dimensions de l'ordre de la dizaine de millimètres de diamètre, comme 13 millimètres, 25 millimètres, ou 42 millimètres, allant jusqu'à quelques centimètres, représentés par des mosaïques 4 allant jusqu'à 1000 par 1000 tuiles 40, soit un million de tuiles 40, voire plus.

Par exemple, pour un échantillon 200 présentant une dimension de 27 millimètres de diamètre, il est nécessaire d'acquérir *π**(D/2)² tuiles, où D correspond au diamètre de l'échantillon 200, si les tuiles 40 sont de forme rectangulaire et mesurent chacune 100 microns par 100 microns. Cela représente à peu près 58000 tuiles à acquérir, afin de paver l'intégralité de la surface de l'échantillon 200.

Des tuiles 40 de faibles tailles, correspondant à des images acquises à l'aide d'objectifs présentant un fort grossissement sont préférables, notamment afin d'augmenter une résolution spatiale dans le plan de l'échantillon 200.

Afin d'enregistrer chacune des images de microscopie champ sombre formant les tuiles 40 de la mosaïque 4, la platine de déplacement 11 déplace l'échantillon 200, de manière par exemple à faire coïncider une paire de coordonnées de l'ensemble de paires de coordonnées préétabli pour chacune des tuiles 40, indiquant ici, le centre géométrique 41 de chaque tuile 40, avec l'axe optique de l'objectif de microscope champ sombre 14. De manière plus général, il s'agit de faire coïncider le champ de vue inclus dans la zone de l'échantillon 200 illuminée par la modalité de microscopie en champ sombre avec la tuile 40 prédéfinie.

Dans le cadre d'un procédé de repérage spatial et d'imagerie spectrale de microparticules 202 dynamique, des points de coordonnées 42 associés à d'éventuelles microparticules 202 sont repérés au sein de chaque tuile 40 imagée par la modalité de microscopie en champ sombre, et des spectres Raman sont enregistrés sur ces points de coordonnées 42 repérés grâce à la modalité de microspectroscopie Raman, avant de procéder à l'acquisition de la tuile 40 suivante. Un ordre successif des tuiles 40 à imager est défini à l'avance, en amont de la mise en œuvre du procédé. Par exemple, la surface de l'échantillon 200 est ici imagée suivant un motif de balayage ligne par ligne, dit de *raster scan* en anglais, ou encore suivant un balayage en serpentin, ou selon tout autre motif de balayage jugé approprié.

Ainsi, suivant le premier mode de réalisation où les positions des tuiles 40 sont prédéfinies, pour chacune des n tuiles 40 formant la mosaïque 4, les étapes décrites ci-dessous sont mises en œuvre, avec entre chacune d'elle, un déplacement 37 de l'échantillon 200, pour passer d'une tuile à l'autre.

On détaille à présent l'application du procédé, par exemple pour l'acquisition de la tuile 40 située dans le coin supérieur gauche de la mosaïque 4, telle que représentée sur la figure 3.

Tout d'abord, il est supposé que le centre géométrique 41 défini pour une des tuiles 40 correspond avec l'axe optique de l'objectif de microscope champ sombre 14, suite à une mise en position de la platine de déplacement 11.

Pour chaque tuile 40, il est procédé à une illumination 30 d'une zone de l'échantillon 200 à l'aide du cône d'éclairage annulaire 124. Ce cône d'éclairage, pour rappel, est généré par la réflexion d'une partie d'un faisceau de lumière blanche 120 par un miroir annulaire 13. La partie réfléchie, formant un cylindre creux est transmise par la région périphérique 142 de l'objectif de microscope champ sombre 14, et focalisée sur l'échantillon 200, de manière à illuminer une zone sur l'échantillon 200 uniquement à l'aide de rayons lumineux présentant une forte obliquité par rapport à l'axe optique de l'objectif de microscope champ sombre 14.

Un enregistrement 31 d'une première image de microscopie en champ sombre, correspondant à l'une des tuiles 40 est ensuite effectué à l'aide d'un capteur d'image 15. Les rayons déviés par l'échantillon 200, notamment par les microparticules 202 contenues, sont collecté par la région centrale 144 de l'objectif de microscope champ sombre 14, comme décrit précédemment. Ces rayons déviés forment la première image de microscopie en champ sombre, où un contraste n'est présent que pour les structures déviant la lumière, c'est-à-dire les microparticules 202. La première image de microscopie en champ sombre est enregistrée sur un champ de vue image inclus dans la zone de l'échantillon 200 illuminée. Cette première image de microscopie en champ sombre correspond à une première tuile 40, située ici dans le coin supérieur gauche de la mosaïque.

Cette modalité de microscopie en champ sombre optimise le contraste sur des échantillons 200 présentant une transparence importante, comme ici, les microparticules 202 de matière plastique ou sur les grains de minéraux. L'étape suivante s'en retrouve facilitée.

En effet, à partir de cette première image de microscopie en champ sombre, il est procédé ensuite à un repérage 32 au sein de cette première image des microparticules 202 éventuelles. Ce repérage 32 est par exemple fait grâce à un algorithme de traitement d'image. Notamment, il est possible de recourir à une détection des formes, ou à une détection de contours, via de tels algorithmes. De manière alternative, les microparticules 202 éventuelles sont reconnues à l'aide d'un algorithme d'apprentissage automatique. Cet algorithme d'apprentissage automatique, par exemple, un algorithme de reconnaissance des formes, est entraîné en amont à l'aide d'une base d'images, de manière à reconnaître certains motifs d'intérêt.

Une fois que les microparticules éventuelles ont été identifiées dans la première image de microscopie, le procédé se poursuit par une extraction 32 des coordonnées des points correspondant éventuellement à des microparticules 202 au sein de l'image champ sombre. Cette extraction est par exemple opérée par l'unité de traitement d'image 60, à l'aide d'un algorithme de traitement d'image, ou par un algorithme d'apprentissage automatique.

Ainsi, on obtient pour cette première image de microscopie champ sombre correspondant à une des tuiles 40 de la mosaïque 4, une liste de points, formées de points de coordonnées 42. Ces points de coordonnées 42 sont définis dans le système de coordonnées de la platine de déplacement 11.

Un point de coordonnées 42 est défini pour chacune des microparticules 202 repérées dans le champ de vue image, par exemple placé au niveau d'un centre géométrique de chacune des microparticules 202. Dit autrement, chaque microparticule 202 figurée sur la tuile 40 imagée en champ sombre est associée à un seul point de coordonnées 42.

Le centre géométrique de chacune des microparticules 202 se situe à l'intérieur de celle-ci, et est placé le plus loin possibles des bords de la microparticules 202.

De manière alternative, une multitude de points de coordonnées 42 peuvent être extraits d'une même microparticule 202 figurant sur la première image de microscopie champ sombre. Cette multitude de points prend alors la forme d'une matrice de points, définie sur chacune des microparticules 202. Un espacement entre les points de coordonnées 42 extraits sur une même microparticules 202 est défini en fonction d'une précision de déplacement de la platine de déplacement 11, ainsi que d'une résolution spatiale de la modalité de microspectrométrie Raman. On obtient ainsi un maillage fin de chaque microparticule 202. Ce maillage fin permet par la suite de mesurer un spectre, ici, un spectre Raman sur chacun des points de la matrice, et ainsi réaliser une cartographie spectrale afin d'accéder à la distribution chimique à l'intérieur de la microparticule 202. En variante, il est également possible de moyenner l'ensemble des spectres acquis au sein d'une microparticules 202 donnée, afin d'obtenir un spectre moyen représentatif de cette microparticules 202.

Optionnellement, il est possible de procéder à un filtrage préalable des microparticules 202 sur lesquels des points de coordonnées 42 sont extraits, comme décrit auparavant. Par exemple, un critère de filtrage est établi sur la base de critères liés aux paramètres morphologiques d'après la première image de microscopie en champ sombre. Il s'agit par exemple de critère de taille ou de forme.

Ici, la variante dans laquelle un unique point de coordonnées 42 est extrait par microparticule 202 apparaissant sur les différentes tuiles 40 est illustrée sur la figure 3. Chaque point de coordonnées 42 repérés sur les différentes tuiles 40 formant la mosaïque 4 est représenté à l'aide d'une croix en traits pointillés.

Ainsi, sur la première image de microscopie champ sombre représentée en haut à gauche sur la figure 3, c'est trois points de coordonnées 42 qui sont extraits : un point de coordonnées 421, un point de coordonnées 422, et un point de coordonnées 423. L'ensemble de ces trois points forment ici la liste de points pour cette tuile.

Un déplacement 34 de l'échantillon, à l'aide de la platine de déplacement 11 permet de faire coïncider l'axe optique de l'objectif de microscope champ sombre 14. Dit autrement, ce déplacement 34 centre la région centrale 144 de l'objectif de microscope champ sombre 14, avec un point de la liste de points établie dans l'étape précédente. Par exemple, il s'agit du point de coordonnées 421, représenté sur la figure 3.

On procède ensuite à une illumination 33 d'un point de mesure sur l'échantillon 200 à l'aide de la modalité de microspectrométrie Raman. Pour cela, un faisceau laser excitateur 160 transmis à travers le miroir annulaire 13 est focalisé par la région centrale 144 de l'objectif de microscope champ sombre 14.

Etant donné que le point de mesure est centré par rapport à l'axe optique de l'objectif de microscope champ sombre 14, le point de mesure coïncide avec le point issu de la liste de points de coordonnées. Autrement dit, le faisceau laser excitateur 160 est focalisé sur le point de coordonnées 421.

La source de lumière blanche 12 est alors coupée, par le biais de son alimentation électrique par exemple, celle-ci étant reliée à l'unité de contrôle 6.

Cependant, il est avantageux de conserver simultanément les deux modalités d'illumination, surtout lors des déplacements de la platine de déplacement 11. En effet, l'utilisation simultanée de l'éclairage par le cône d'éclairage annulaire 124 et de l'illumination d'un point de mesure par focalisation du faisceau laser permet notamment d'observer simultanément la zone illuminée sur l'échantillon 200, et le point de mesure à l'aide du capteur d'image 15 de la modalité de microscopie en champ sombre. Une portion infime du faisceau laser excitateur 160 parvient à traverser le deuxième filtre dichroïque 18. Cette portion infime représente par exemple une portion inférieure à 0,001% d'une puissance optique de ce faisceau laser excitateur 160. Cette portion est néanmoins suffisante pour être observable sur le capteur d'image 15. Il est ainsi possible d'observer une position relative du point de mesure généré par le faisceau laser excitateur 160 par rapport à la zone illuminée sur l'échantillon 200 en champ sombre. Le point de mesure apparaît alors comme un petit point lumineux sur le champ de vue image.

Ainsi, si les plages de longueurs d'onde disjointes sont choisies pour le faisceau de lumière blanche 120 et le faisceau laser excitateur 160, avec le spectre lumineux du faisceau de lumière blanche 120 strictement inférieure à la longueur d'onde du faisceau laser excitateur 160, alors les deux illuminations sont maintenues simultanément, sans risque de parasitage.

On procède ensuite à une collection 36 d'un spectre Raman émis depuis le point de mesure. Ce spectre est collecté par la région centrale 144 de l'objectif de microscope champ sombre 14, et envoyé jusqu'au spectromètre 19 pour analyse, suivant un chemin optique détaillé précédemment. Tout comme pour l'illumination de l'échantillon 200 par le faisceau laser excitateur 160, la collection du spectre Raman ne nécessite pas de commutation mécanique, ce qui permet de prévenir d'un désalignement des éléments optiques le long de ce chemin optique.

Les autres points de coordonnées 422, 423... extraits de la même image de microscopie en champ sombre sont également sondés, afin d'y recueillir un spectre Raman. Pour cela, un déplacement 34 de l'échantillon 200 est opéré, via la platine de déplacement 11, afin de faire coïncider le point de mesure successivement avec chacun des autres points de coordonnées 422, 423... de la liste de points de la tuile considérée. Ainsi, dans le cadre de l'exemple illustré, la platine de déplacement 11 déplace l'échantillon 200 afin de balayer le point de coordonnées 422, puis le point de coordonnées 423. Un motif de balayage au sein de la tuile 40 est illustré par des flèches.

Un spectre Raman est collecté en chacun des points de la liste de points, par un déplacement 34 de la platine de déplacement 11 suivi de la collection 36 d'un spectre.

Ces deux étapes de collection 36 et de déplacement 34 sont appliquées récursivement, pour tous les points de coordonnées 42 de la liste de points extraits de la première image de microscopie en champ sombre, i.e. extraits de la première tuile 40.

Après avoir balayé l'ensemble des points de coordonnées 42 de la liste de points de la première tuile 40, une nouvelle image de microscopie en champ sombre est enregistrée dans le cadre du procédé. Pour cela, un déplacement de l'échantillon 37 fait coïncider un des centres géométriques dont une paire de coordonnées a été prédéfinie, avec l'axe optique de l'objectif de microscope champ sombre.

La liste de points est alors réinitialisée.

Cette nouvelle image de microscopie en champ sombre correspond à une tuile 40 suivante de la mosaïque 4, définie selon le motif de balayage choisi. Ici, il s'agit par exemple de la tuile à droite de la première tuile 40 décrite précédemment, c'est-à-dire sur la première ligne et deuxième colonne de la figure 3.

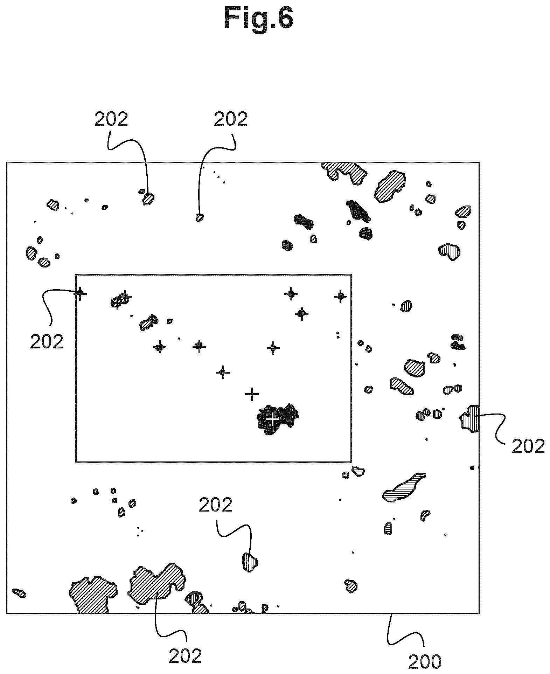

La succession d'étapes précédemment décrites est répétée pour cette tuile 40 suivante, et pour l'ensemble des tuiles 40 comprises dans la mosaïque 4, jusqu'à obtenir une image spectrale représentative de l'entièreté de l'échantillon 200. Une telle image spectrale est représentée sur la figure 6.

Sur cette image spectrale, les structures visibles, correspondant ici à des microparticules 202, sont imagées grâce à la modalité de microscopie en champ sombre, tandis que des couleurs, ici représentées par des tramages, sont associées à chacune des microparticules 202. Ces couleurs indiquent la nature chimique, i.e. la composition, des microparticules 202, qui correspondent dans l'exemple illustré en figure 6, de manière non-limitative à des microparticules 202 de matière minérale, ici plus particulièrement de la craie. Ces couleurs correspondent par ailleurs à des fausses couleurs, choisies de manière arbitraire, en fonction de la composition chimique de la microparticule. La composition de chaque microparticule 202 est déterminée par l'analyse des spectres Raman ponctuels collectés par la modalité de microspectrométrie Raman, notamment d'après les raies Raman présentes dans le spectre collecté.

En pratique, le spectre Raman de chacune des microparticules 202 est identifié et assigné à une classe par l'intermédiaire d'algorithmes dédiés. Par exemple, et de manière non-limitative, il est par exemple possible d'identifier la composition chimique d'une microparticule 202 par une corrélation entre le spectre acquis sur la microparticule 202 et une base de données spectrales préétablies et enregistrée en mémoire. La microparticules 202 est alors identifiée comme correspondant à l'espèce chimique connue dont le spectre possède la corrélation la plus proche.

Il est également possible de procéder à une analyse multivariée, par exemple, grâce à une résolution multivariée de courbe, également connue sous le terme anglosaxon de *Multivariate Curve Resolution (MCR).* Une telle analyse multivariée permet de répartir les microparticules 202 en différentes classes, celles-ci étant ensuite identifiées manuellement ou automatiquement.

Selon une autre variante, l'identification de la composition chimique des microparticules 202 se fait par le biais d'un apprentissage automatique. Un modèle est alors entraîné en amont sur un grand nombre de données labelisées, afin de permettre par la suite l'identification du spectre de la microparticules 202 à caractériser.

Ainsi, pour chaque tuile 40 obtenue et correspondant à une image de microscopie en champ sombre, une information spectrale associée aux microparticules 202 imagées dans la tuile 40 est extraite. Cette information spectrale permet ensuite de remonter à la nature chimique de ces microparticules 202.

Ce procédé d'acquisition dynamique tel que décrit dans le premier mode de réalisation, offre notamment les avantages suivants :

En premier lieu, des paramètres morphologiques des microparticules 202 sont déterminés à la volée, pendant la reconstruction tuile à tuile de la mosaïque 4. Il est ainsi possible d'exploiter pleinement la résolution spatiale de la modalité de microscopie en champ sombre lors de la détermination des paramètres morphologiques. Cela a pour effet d'améliorer la précision de cette détermination. En effet, dans le mode statique évoqué en préambule, la résolution de l'image de microscopie en champ sombre doit être compressée durant l'acquisition afin de limiter l'espace mémoire nécessaire au stockage de ces images de champ sombre.

De plus, l'analyse spectrale est également faite à la volée, pendant la reconstruction de la mosaïque 4 tuile par tuile. Le déplacement effectué par la platine de déplacement 11 pour se positionner sur chacune des microparticules est donc faible, de l'ordre de quelques micromètres. Or, la précision d'une platine de déplacement 11 est usuellement donnée en micromètres par millimètres, typiquement 3 micromètres par millimètres. Ainsi, un déplacement de l'ordre de quelques micromètres est plus précis qu'un déplacement de plusieurs millimètres. Etant donné que le système ici décrit est appliqué à des objets d'étude de dimensions micrométriques, une précision du même ordre de grandeur, c'est à dire d'ordre micrométrique devient critique. Ainsi, le procédé permet un gain en termes de résolution spatiale lors de la mesure à l'aide de la modalité de microspectrométrie Raman. Dans le cadre d'un procédé statique, comme décrit en préambule, l'échantillon 200 est imagé sur l'ensemble de sa surface, typiquement une région d'un centimètre par un centimètre, avant de revenir balayer les points d'intérêt sur les microparticules 202 à l'aide de la modalité de microspectroscopie Raman. Ceci entraîne une erreur de positionnement potentiellement de plusieurs micromètres.

De plus, l'approche dynamique telle que décrite dans le premier mode de réalisation permet également de limiter les désagréments induits par des variations des conditions environnementales rencontrés en mode statique. En effet, l'acquisition d'une mosaïque 4 complète à l'aide de la modalité de microscopie en champ sombre nécessite plusieurs dizaines de minutes, voire plutôt une heure. Ainsi, il est possible que les conditions environnementales, telles que la température, l'humidité, les vibrations, varient, et engendrent une imprécision de la mesure lors du passage entre la modalité de microscopie champ sombre et la modalité de microspectroscopie Raman. Le mode dynamique, décrit ici via deux modes de réalisation, permet d'enchaîner les deux modalités dans une temporalité courte, voire, permet de mettre en œuvre les deux modalités de manière simultanée. Ainsi, le système est rendu insensible aux variations environnementales qui ont lieu sur des échelles de temps longues.

En plus de ces avantages par rapport à l'approche statique, la présente invention s'affranchit des temps morts correspondant aux temps de commutation mécanique pour passer d'une modalité à une autre au sein d'une tuile 40. En effet, le passage de la modalité de microscopie en champ sombre, et la modalité de microspectroscopie Raman se fait sans commutation d'éléments mécanique, grâce au système détaillé précédemment. Ainsi, aucun temps de commutation mécanique n'est nécessaire, ce qui représente un gain de temps considérable.

En effet, pour des applications de microscopie, des systèmes de commutation mécanique de haute précision sont employés. Usuellement, de tels systèmes de commutation mécanique nécessitent quelques secondes, par exemple 6 secondes, pour permettre de basculer de la modalité de microscopie champ sombre à la modalité de microspectrométrie Raman, et quelques secondes, par exemple 6 secondes, pour effectuer la commutation dans le sens inverse, c'est autant de temps qui est perdu par tuiles 40 imagées. C'est ici 12 secondes qui sont perdues par tuiles 40 imagées. A l'échelle d'une mosaïque 4 représentant un échantillon 200 de grande taille, i.e. de l'ordre de quelques centimètres par quelques centimètres de côté, comprenant plusieurs centaines de tuiles 40, voire millions de tuiles 40, c'est un temps de mesure considérable qui est ainsi perdu.

Même pour des systèmes de commutation mécanique plus performants, donc par extension, également plus coûteux, un temps de commutation mécanique de quelques centaines de microsecondes demeure. En réalité, même sur de tels systèmes de commutation mécanique, un temps de commutation mécanique de l'ordre de quelques millisecondes demeure. A l'échelle d'un échantillon 200 de grande taille, ces temps de commutations ne sont pas négligeables.

Le procédé proposé mise en oeuvre par le système de repérage spatial dans une image et d'analyse spectrale de microparticules 1 décrit permet donc un gain de temps sur l'analyse d'échantillons de grande dimension, i.e. de quelques dizaines de millimètres de côté, voir quelques centimètres et comprenant des microparticules 202 de faible contraste.

### Procédé "Petit poucet"

Un second mode de réalisation du procédé divulgué est illustré par un organigramme 5 sur la figure 4.

Cet organigramme 5 comprend les étapes suivantes, en tant qu'initialisation :
- illumination 50 d'une zone sur l'échantillon 200 à l'aide de la modalité de microscopie en champ sombre,
- enregistrement 51 d'une image de microscopie en champ sombre,
- repérage 52 au sein de l'image, des microparticules 202,
- extraction 53 des coordonnées des points correspondant à ces microparticules 202, afin de former une liste,
- déplacement 54 de l'échantillon 200, afin de faire correspondre la région centrale 144 de l'objectif de microscope champ sombre 14, avec un point de la liste de coordonnées extraite,
- illumination 55 de l'échantillon 200 à l'aide de la modalité de microspectroscopie Raman, le faisceau laser excitateur 160 étant focalisé en un point de mesure qui coïncide avec le point de l'étape précédente,
- collection 56 du spectre Raman, émis depuis le point de mesure, par la région centrale 144 de l'objectif de microscope champ sombre 14.

Une fois initialisée, le procédé selon le second mode de réalisation est poursuivi par le déplacement 54 de l'échantillon, afin de faire correspondre l'axe optique de l'objectif de microscope champ sombre 14, avec un autre point de la liste de coordonnées extraite. Ensuite, les étapes d'illumination 50, d'enregistrement 51, de repérage 52 à l'aide de la modalité de microscopie en champ sombre étant exécutées, parallèlement, ou avant, ou à la suite des étapes d'illumination 55 et de collection 56 à l'aide de la modalité de microspectroscopie Raman.

Le procédé est ainsi rebouclé à l'étape de déplacement 54, par exemple, tant que la liste de points contient des points de coordonnées 42 qui n'ont pas encore été balayés et mesurés par microspectroscopie Raman.

Dans ce second mode de réalisation, une mosaïque 4 représentative de l'échantillon 200 est reconstituée à l'aide d'une pluralité d'images de microscopie en champ sombre, à l'instar de ce qui avait été décrit pour le premier mode de réalisation. Ainsi, cette mosaïque 4 représente un champ de dimension supérieure au champ de vue d'une image de microscopie champ sombre. Cette mosaïque 4 se compose de tuiles 40, c'est-à-dire d'images de microscopie champ sombre agencées à manière à reproduire l'échantillon 200 analysé. Certaines de ces tuiles 40, dans le second mode de réalisation se chevauchent au moins partiellement. Dit autrement, certaines des tuiles 40 de la mosaïque 4 couvrent des zones spatialement identiques en partie.

Tout comme dans le premier mode de réalisation, d'après les caractéristiques du capteur d'image 15 et de l'objectif de microscope champ sombre 14 utilisés pour collecter une image de microscopie en champ sombre, chaque tuile 40 présente une forme rectangulaire de 140 micromètres par 105 micromètres.

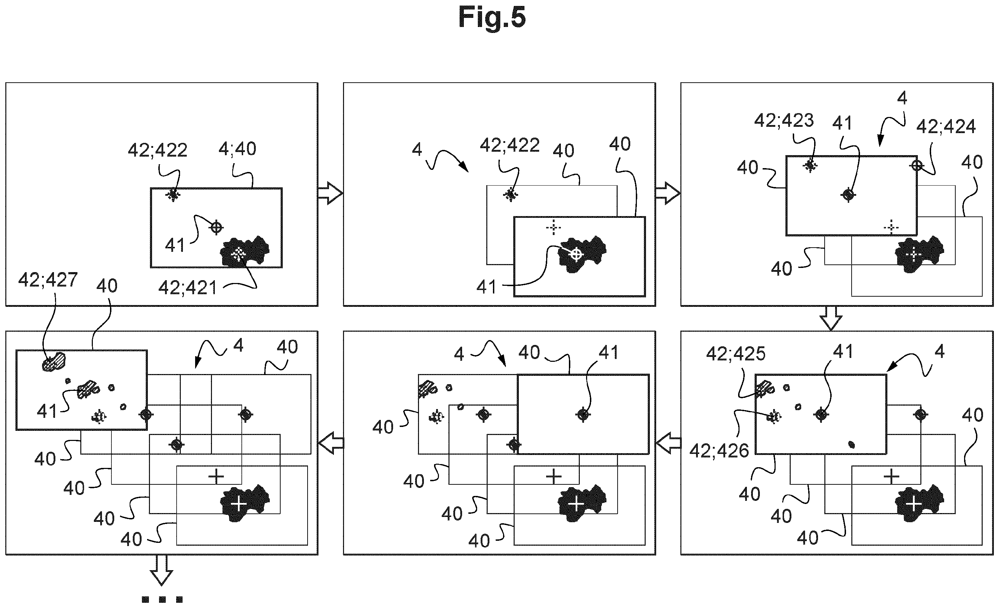

Une portion de mosaïque 4 obtenue selon le second procédé est reproduite sur la figure 5. Un rectangle indique des délimitations de la portion de mosaïque 4 de la figure 3, ce rectangle étant également reproduit sur la figure 6.

Dans ce mode de réalisation, les centres géométriques 41 des tuiles 40 ne sont pas prédéfinis. De même, l'agencement des tuiles 40 les unes par rapport aux autres n'est pas prédéfini en amont du procédé. En effet, dans ce second mode de réalisation, des paires de coordonnées permettant de définir la position de chacune tuiles 40, sont définis durant le procédé, d'après des informations collectées durant la mise en œuvre du procédé.

Plus spécifiquement, des centres géométriques 41 sont choisis d'après des points de coordonnées 42 extraits durant le procédé, ce qui entraîne l'acquisition de nouvelles images de microscopie en champ sombre, et l'extraction de nouveaux points de coordonnées 42. Ces nouveaux points de coordonnées 42 deviennent potentiellement à leur tour des centres géométriques 41 pour des tuiles 40, et ainsi de suite.

Ainsi, à la différence du premier mode de réalisation, le passage d'une tuile 40 à une autre tuile 40 ne se fait pas nécessairement via un déplacement dédié, et un pavage de la mosaïque 4 se fait au fur et à mesure des déplacements 54. Ces déplacements 54 visent à balayer les différents points de coordonnées 42 de la liste de points, qui constituent alors des centres géométriques 41 pour des tuiles 40.

Les étapes précédemment décrites pour le second mode de réalisation du procédé sont à présent détaillées grâce à l'exemple de la figure 5.

Enfin de mettre en route le procédé, la platine de déplacement 11 place l'échantillon 200 à une position arbitraire. Par exemple, un centre géométrique 41 d'une première tuile 40, représentée sur la figure 5, est choisi ici à mi-course d'une amplitude de déplacement de la platine de déplacement 11 selon l'axe x et selon l'axe y. Cette position correspond à un milieu de la platine de déplacement 11.

L'étape suivante du procédé consiste en une illumination 50 d'une zone de l'échantillon 200 selon la modalité de microscopie en champ sombre. Comme décrit précédemment, l'illumination 50 de la zone de l'échantillon 200 centrée autour du centre géométrique 41 de la première tuile 40, se fait par un cône d'éclairage annulaire 124, focalisé sur l'échantillon 200 par la région périphérique 142 de l'objectif de microscope champ sombre 14.

Sur la figure 5, le centre géométrique 41 de chaque tuile 40 est indiqué par une cible dessinée en trait plein, c'est-à-dire, une croix entourée d'un cercle.

L'illumination 50 de cette zone par la modalité de microscopie champ sombre conduit à un enregistrement 51 d'une première image de microscopie en champ sombre. Une fois encore, le champ de vue de cette image est inclus dans la zone de l'échantillon 200 illuminée. Cette première image de microscopie en champ sombre est obtenue par la collection par la région centrale 144 de l'objectif de microscope champ sombre 14 des rayons lumineux déviés.

A partir de cette première image de microscopie en champ sombre, on procède à un repérage 52 des microparticules 202 potentielles au sein de la première image. Ce repérage 52 est supposé identique à celui décrit pour le premier mode de réalisation.

Après avoir repéré les éventuelles microparticules 202 contenues dans le champ de vue image, par exemple, grâce à un algorithme de traitement d'images dédié, on procède à une extraction 53 des coordonnées des points correspondant à d'éventuelles microparticules 202. Cette extraction 53 est opérée comme décrit précédemment, par l'unité de traitement, à l'aide d'algorithmes appropriés, et/ou par un utilisateur. De même que pour le premier mode de réalisation, un seul point de coordonnées 42 est associé à chacune des microparticules 202 visualisées en champ sombre, même si des variantes sont possibles.

Ces points de coordonnées 42 extraits sont ajoutés à une liste de points.

Sur la première tuile 40, c'est deux points de coordonnées 42 qui sont extraits, le point de coordonnées 421 et le point de coordonnées 422. Ces points de coordonnées 42 sont indiqués sur la figure 5, à l'aide de cibles en traits pointillés.

Un déplacement 54 de l'échantillon 200 par la platine de déplacement 11 fait correspondre l'axe optique de l'objectif de microscope champ sombre 14, avec un des points de coordonnées de la liste de points. Il est notamment choisi un point de cordonnées qui n'a pas encore été balayé par la modalité de microspectroscopie Raman. Par exemple, il s'agit ici du point de coordonnés 421, qui correspond au point de coordonnés 421 associé à la première microparticules 202 identifiée et repérée au sein de la tuile 40.

L'étape suivante comprend une illumination 55 d'un point de mesure sur l'échantillon 200 grâce à la modalité de microspectroscopie Raman. Le faisceau laser est focalisé sur l'échantillon 200 en un point de mesure par la région centrale 144 de l'objectif de microscope champ sombre 14. Ce point de mesure est ici dans le prolongement de l'axe optique du microscope champ sombre 14.

Ainsi, le déplacement 54 fait coïncider le point de mesure illuminé avec le point de coordonnées 421 issu de la liste de points.

Suite à l'illumination 55 et au déplacement 54, on procède à la collection 56 d'un spectre Raman émis depuis le point mesure, ce spectre Raman étant collecté par la région centrale 144 de l'objectif de microscope champ sombre 14.

De manière avantageuse, étant donné qu'aucune commutation mécanique n'est nécessaire pour passer d'une modalité à une autre, il est possible de procéder à un nouvel enregistrement 50 d'une nouvelle tuile 40, dont le centre géométrique 41 est confondu avec un des points de coordonnées 42 issus de la liste de points L.

Ici, dans l'exemple représenté sur la figure 5, le centre géométrique 41 de la nouvelle tuile 40 est confondu avec le point de coordonnées 421. Ce point est indiqué d'une cible en trait plein, tant que le centre géométrique 41 de la première tuile 40 est indiqué d'une croix en traits pointillés.

Pour procéder à l'acquisition d'une nouvelle tuile 40, dans une première variante de ce second mode de réalisation, si les plages spectrales de la source laser 16 et de la source de lumière blanche 12 sont disjointes, et si les composantes du spectre de lumière blanche sont de longueur d'onde inférieure à la longueur d'onde du faisceau laser excitateur 160, alors les deux illuminations sont utilisées simultanément. Il est supposé ici qu'il s'agit du cas de figure ici présenté.

On procède alors à la fois à une illumination 55 d'un point de mesure par le faisceau laser excitateur 160, suivi de la collection 36 du spectre Raman émis, et à la fois à un enregistrement 51 de la nouvelle image de microscopie en champ sombre, dont le champ de vue est inclus dans la zone de l'échantillon 200 illuminée, comme décrit précédemment.

Cet enregistrement 51 est suivi d'un repérage 52 des microparticules 202, d'une extraction 53 des coordonnées des points correspondant à des microparticules 202. Ici, aucun point correspondant à une microparticules 202 n'est détectée.

Selon une seconde variante, suite au déplacement 54, on procède d'abord à l'illumination 50, à l'enregistrement 51, au repérage 52 et à l'extraction 53 d'après la modalité d'imagerie en champ sombre, puis à l'illumination 55 et à la collection 56 selon la modalité de microspectrométrie Raman.

Indépendamment d'un ordre d'utilisation des deux modalités, le procédé est poursuivi par le déplacement 54 de l'échantillon, afin de faire coïncider le point de mesure avec un autre des points de la liste de points L.

Il s'agit ici du point de coordonnées 422, comme représenté sur la figure 5. Ce point de coordonnées 422 devient alors le centre géométrique 41 d'une nouvelle tuile 40. Ici, il s'agit de la troisième tuile 40 imagée.

Les étapes du procédé sont alors répétées, via une éventuelle illumination 50, un enregistrement 51 d'une nouvelle image de microscopie en champ sombre qui constitue la troisième tuile 40, repérage 52 et une extraction 53 des coordonnées des points correspondants à d'éventuelles microparticules 202, ces étapes étant ici exécutées en parallèle des étapes d'illumination 55 du point de mesure par le faisceau laser excitateur et de collection 56 du spectre Raman. Ici, notamment, le point de coordonnées 423 et le point de coordonnées 424 sont détectés et extraits de la troisième tuile 40. Ces points de coordonnées 423 et 424 sont ajoutés à la liste de points à balayer.

Un nouveau déplacement 54 de la platine place ensuite le point de mesure sur un des points de la liste de points, et les étapes du procédé décrites sont ainsi répétées.

La mosaïque 4 représentative à la fois des structures et de la nature chimique de l'échantillon 200 est ainsi reconstruite à la volée. Dit autrement, la liste de points L est mise à jour continuellement durant la mise en œuvre du procédé, et non pas réinitialisée entre chaque tuile 40.

Une quatrième tuile 40, correspondant à une quatrième image de microscopie en champ sombre, est acquise avec comme centre géométrique 41 le point de coordonnées 423. Les points de coordonnées 425 et 426 sont extraits de cette quatrième image, et la platine de déplacement 11 déplace l'échantillon 200 de manière à sonder le point de coordonnées 424 à l'aide de la modalité de microspectrométrie Raman. Ce point de coordonnées 424 devient le centre géométrique 41 d'une cinquième tuile 40, pour laquelle les étapes du procédé sont répétées. Le point de coordonnées 425 de la liste de points L est ensuite balayé, afin d'y collecter à la fois un spectre Raman, mais aussi une sixième image de microscopie champ sombre correspondant à une sixième tuile 40. Le point de coordonnées 427 est ensuite extrait de cette sixième image.

Le procédé aboutit à l'obtention d'une image spectrale correspondant à une mosaïque 4 représentant la totalité de la surface de l'échantillon 200. Cette image spectrale est représentée figure 6, c'est-à-dire, qu'elle correspond à la même image spectrale qu'obtenue avec le premier mode de réalisation décrit précédemment.

Les structures des microparticules 202 sont obtenues à l'aide de la modalité de microscopie champ sombre, qui met en avant des contrastes même sur ces échantillons 200 fortement transparents, tandis que les fausses couleurs sont associées à une composition déterminée par analyse du spectre Raman.

Dans le cadre de ce second mode de réalisation, la simultanéité des deux illuminations est exploitée afin d'utiliser les déplacements nécessaires pour un sondage des points d'intérêt par la modalité de microspectroscopie Raman, pour également imager l'échantillon 200 par microscopie de champ sombre.

Un ordre de balayage des points de coordonnées 42 de la liste de points L est choisi par exemple de manière à minimiser des distances parcourues par la platine lors d'un déplacement. Par exemple, il est avantageux de minimiser une distance euclidienne entre deux points de coordonnées 42 balayés successivement. Il est également possible de choisir de minimiser une distance de déplacement totale nécessaire pour parcourir l'ensemble des points de coordonnés 42.

Cet ordre de balayage est ainsi amené à être réorganisé durant le procédé, notamment si des nouveaux points de coordonnées 42 sont extraits.

Un protocole adéquat est également implémentable, dans l'éventualité où il n'y a pas de points de coordonnées 42 dans la liste de points L qui n'a pas encore été balayé. Par exemple, il est alors décidé de déplacer l'échantillon 200 d'une quantité suffisante afin de sonder une nouvelle zone de l'échantillon 200.

Ce second mode de réalisation présente les mêmes avantages que le premier mode de réalisation décrit, notamment en éliminant des temps de commutation mécaniques rédhibitoires lors du passage de la modalité de microscopie en champ sombre, à la modalité de microspectroscopie Raman.

### Variantes

La présente invention n'est nullement limitée aux modes de réalisation décrits et représentés, mais l'homme du métier saura y apporter toute variante conforme à l'invention.

## Revendications

1. Procédé de repérage spatial dans une image et d'analyse spectrale de microparticules (202) dans un échantillon (200) par un système de microscopie optique, le procédé comprenant les étapes suivantes :
A) illumination (30, 50) d'une zone de l'échantillon (200) à l'aide d'un cône d'éclairage annulaire (124), le cône d'éclairage annulaire (124) étant issu d'un faisceau de lumière blanche (120) en partie réfléchi par un miroir annulaire (13) et focalisé par une région périphérique (142) d'un objectif de microscope champ sombre (14),
B) enregistrement (31, 51) d'une première image de microscopie en champ sombre sur un champ de vue image inclus dans la zone de l'échantillon (200) illuminée, la première image en champ en sombre étant collectée par une région centrale (144) de l'objectif de microscope champ sombre (14),
C) repérage (32, 52) dans la première image en champ sombre des microparticules (202),
D) extraction (33, 53) des coordonnées des points correspondant à des microparticules (202) au sein de l'image champ sombre enregistrée, de manière à former une liste de points,
E) déplacement (34, 54) de l'échantillon (200) de manière à faire coïncider un axe optique de l'objectif de microscope champ sombre (14) avec un point de la liste de points,
F) illumination (35, 55) d'un point de mesure sur l'échantillon (200) à l'aide d'un faisceau laser excitateur (160) transmis à travers le miroir annulaire (13) et focalisé par la région centrale (144) de l'objectif de microscope champ sombre (14), le point de mesure coïncidant avec le point de la liste de points,
G) collection (36, 56) d'un spectre Raman émis depuis le point de mesure, le spectre Raman étant collecté par la région centrale (144) de l'objectif de microscope champ sombre (14).

2. Procédé selon la revendication 1, dans lequel les étapes A) et F) sont exécutées simultanément, une zone est illuminée sur l'échantillon (200) par la région périphérique (142) de l'objectif de microscope champ sombre (14), tandis qu'un point de mesure au sein de la zone est illuminé par la région centrale (144) de l'objectif de microscope champ sombre (14).

3. Procédé selon l'une quelconque des revendications 1 à 2, dans lequel un champ de dimensions supérieures au champ de vue image est reconstitué par une mosaïque (4) d'images de microscopie en champ sombre, ces images de microscopie en champ sombre correspondant à des tuiles (40) de la mosaïque (4).

4. Procédé selon la revendication 3, dans lequel un positionnement de chaque tuile (40) de la mosaïque (4) est prédéfini en amont du procédé.

5. Procédé selon la revendication 4, dans lequel les étapes E), F) et G) sont répétées jusqu'à avoir balayé tous les points de la liste de points extraite sur une tuile (40) donnée, avant de procéder à une étape de déplacement (36) de l'échantillon (200) afin de centrer le champ de vue de l'objectif de microscope champ sombre (14) sur une autre tuile (40) de la mosaïque (4) et reprendre le procédé depuis l'étape A), afin d'enregistrer une autre image de microscopie en champ sombre.

6. Procédé selon la revendication 5, dans lequel pour chaque tuile (40) de la mosaïque (4), la liste de points comporte un nombre fixé de points.

7. Procédé selon la revendication 3, dans lequel un positionnement d'au moins une tuile (40) de la mosaïque (4) est établi en fonction des coordonnées d'un point de la liste de points.

8. Procédé selon la revendication 7, dans lequel après le déplacement (54) de l'étape E) pour faire coïncider l'axe optique de l'objectif de microscope champ sombre (14) avec un point de la liste de points, les étapes A), B), C), D), F), et G) sont exécutées, une nouvelle image de microscopie en champ sombre, correspondant à une nouvelle tuile (40) de la mosaïque (4), et un spectre Raman émis depuis le point de mesure, sont enregistrés, ces étapes étant suivies d'un autre déplacement (54) de l'échantillon (200) pour faire coïncider l'axe optique de l'objectif de microscope champ sombre (14) avec un autre point de la liste de points.

9. Procédé selon la revendication 8, dans lequel des points supplémentaires extraits de la nouvelle image de microscopie en champ sombre enregistrée après le déplacement (54) de l'étape E), sont ajoutés à la liste de points à balayer.

10. Système de repérage spatial dans une image et d'analyse spectrale de microparticules (1) comprenant un microscope optique, une source laser (16), une source de lumière blanche (12), un capteur d'image (15), un spectromètre (19), et une unité de contrôle (6), celle-ci comprenant une unité de traitement d'image (60), le microscope optique comprenant un porte-échantillon (20) monté sur une platine de déplacement (11), le porte-échantillon (20) étant adapté pour recevoir un échantillon (200),
- le système étant **caractérisé en ce qu'**il comprend :
- un système optique comprenant un miroir annulaire (13) et un objectif de microscope champ sombre (14), le système optique étant disposé entre la source laser (16), la source de lumière blanche (12) et le porte-échantillon (20), l'objectif de microscope champ sombre (14) présentant une région centrale (144) et une région périphérique (142),
- le miroir annulaire (13) est configuré pour réfléchir une partie d'un faisceau de lumière blanche (120) émis par la source de lumière blanche en direction de la région périphérique (142) de l'objectif de microscope champ sombre (14), et transmettre un faisceau laser excitateur (160) émis par la source laser (16) en direction de la région centrale (144) de l'objectif de microscope champ sombre (14),
- l'objectif de microscope champ sombre (14) est adapté pour transmettre la partie du faisceau de lumière blanche à l'aide de sa région périphérique (142) en direction du porte-échantillon (20) et transmettre le faisceau laser excitateur (160) via sa région centrale (144) en direction du porte-échantillon (20),
- l'objectif de microscope champ sombre (14) est adapté à focaliser la partie du faisceau lumineux afin d'illuminer une première zone d'un échantillon (200) sur le porte-échantillon (20) à l'aide d'un cône d'éclairage annulaire (124) et l'objectif de microscope champ sombre (14) est adapté à focaliser le faisceau laser excitateur (160) sur un point de mesure compris dans la première zone,
- la région centrale (144) de l'objectif de microscope champ sombre (14) est adaptée à collecter une image de microscopie en champ sombre sur un champ de vue image inclus dans la première zone illuminée, l'image de microscopie en champ sombre étant enregistrée à l'aide du capteur d'image (15),
- l'unité de traitement d'image (60) est adaptée à repérer des microparticules (202) éventuelles, et à extraire de l'image de microscopie en champ sombre des coordonnées des points associés à ces microparticules (202), afin d'établir une liste de points,
- la platine de déplacement (11) est configurée pour déplacer le porte-échantillon (200), afin de faire coïncider le point de mesure et un point de la liste de points ou afin de placer le champ de vue image de l'objectif de microscope champ sombre (14) sur une autre zone au moins partiellement différente de la première zone ;
- la région centrale (144) de l'objectif de microscope champ sombre (14) est également adaptée à collecter un spectre Raman généré depuis le point de mesure, le spectre Raman étant enregistré par un spectromètre (19) Raman.

## Patentansprüche

1. Verfahren zur räumlichen Markierung in einem Bild und zur spektralen Analyse von Mikropartikeln (202) in einer Probe (200) durch ein optisches Mikroskopiesystem: wobei das Verfahren die folgenden Schritte aufweist:
A) Beleuchtung (30, 50) eines Bereichs der Probe (200) mittels eines ringförmigen Beleuchtungskegels (124), wobei der ringförmige Beleuchtungskegel (124) von einem Kegel weißen Lichts (120) stammt, der zum Teil von einem ringförmigen Spiegel (13) reflektiert und durch eine Umfangszone (142) eines Dunkelfeldmikroskopobjektivs (14) fokussiert wird,
B) Speicherung (31, 51) eines ersten Dunkelfeldmikroskopiebilds auf einem in dem beleuchteten Probenbereich (200) enthaltenden Bildsichtbereichs, wobei das erste Dunkelfeldbild von einem Zentralbereich (144) des Dunkelfeldmikroskopobjektivs (14) erfaßt wird,
C) Markierung (32, 52) der Mikropartikel (202) im ersten Dunkelfeldbild,
D) Auslesung (33, 53) der Koordinaten der Mikropartikeln (202) entsprechenden Punkte in dem eingespeicherten Dunkelfeldbild, um eine Liste von Punkten zu bilden,
E) Verlagerung (34, 54) der Probe (200), damit eine optische Achse des Dunkelfeldmikroskopobjektivs (14) mit einem Punkt der Liste von Punkten zusammenfällt,
F) Beleuchtung (35, 55) eines Meßpunkts auf der Probe (200) mittels eines durch den ringförmigen Spiegel (13) hindurch übertragenen und durch den Zentralbereich (144) des Dunkelfeldmikroskopobjektivs (14) fokussierten Anregungslaserstrahls (160), wobei der Meßpunkt mit dem Punkt der Liste von Punkten zusammenfällt,
G) Erfassung (36, 56) eines vom Meßpunkt ausgesandten Raman-Spektrums, wobei das Raman-Spektrum vom Zentralbereich (144) des Dunkelfeldmikroskopobjektivs (14) erfaßt wird.

2. Verfahren gemäß Anspruch 1, bei dem die Schritte A) bis F) gleichzeitig durchgeführt werden, eine Zone auf der Probe (200) durch den Randbereich (142) des Dunkelfeldmikroskopobjektivs (14) beleuchtet wird, während ein Meßpunkt des Bereichs durch den Zentralbereich (144) des Dunkelfeldmikroskopobjektivs (14) beleuchtet wird.

3. Verfahren gemäß einem der Ansprüche 1 bis 2, bei dem ein Feld mit größeren Abmessungen als denen des Bildsichtbereichs durch ein Mosaik von Dunkelfeldmikroskopbildern zusammengesetzt wird, wobei diese Dunkelfeldmikroskopbilder Fliesen (40) des Mosaiks (4) entsprechen.

4. Verfahren gemäß Anspruch 3, bei dem eine Positionierung jeder Fliese (40) vor dem Verfahren vorbestimmt wird.

5. Verfahren gemäß Anspruch 4, bei dem die Schritte E), F) und G) so lange wiederholt werden, bis alle Punkte der Liste von auf einer gegebenen Fliese (40) erfaßten Punkten überstrichen sind, bevor ein Schritt des Verlegens (36) der Probe (200) durchgeführt wird, um den Sichtbereich des Dunkelfeldmikroskopobjektivs (14) auf eine andere Fliese (40) des Mosaiks (4) zu zentrieren und bevor das Verfahren gemäß Schritt A) wieder aufgenommen wird, um ein anderes Dunkelfeldmikroskopiebild zu speichern**.**

6. Verfahren gemäß Anspruch 5, bei dem die Liste von Punkten für jede Fliese (40) des Mosaiks (4) eine feste Anzahl Punkte aufweist.

7. Verfahren gemäß Anspruch 3, bei dem eine Positionierung mindestens einer Fliese (40) des Mosaiks (4) in Abhängigkeit von den Koordinaten eines Punkts der Liste von Punkten erfolgt.

8. Verfahren gemäß Anspruch 7, bei dem nach der Verlagerung (54) im Schritt E), um die optische Achse des Dunkelfeldmikroskopobjektivs (14) mit einem Punkt der Liste von Punkten zusammenzubringen, die Schritte A), B), C), D), F) und G) durchgeführt werden, wobei ein neues Dunkelfeldmikroskopbild, das einer neuen Fliese (40) des Mosaiks (4) entspricht, und ein von dem Meßpunkt ausgesandtes Raman-Spektrum gespeichert werden, wobei auf diese Schritte eine weitere Verlagerung (54) der Probe (200) folgt, um die optische Achse des Dunkelfeldmikroskopobjektivs (14) mit einem anderen Punkt der Liste von Punkten zusammenzubringen.

9. Verfahren gemäß Anspruch 8, bei dem nach der Verlagerung (54) im Schritt E) gespeicherte, aus dem neuen Dunkelfeldmikroskopbild ausgelesene zusätzliche Punkte zu der Liste der zu überstreichenden Punkte hinzugefügt werden.

10. System (1) zur räumlichen Markierung in einem Bild und zur spektralen Analyse von Mikropartikeln mit einem optischen Mikroskop, einer Laserquelle (16), einer Quelle weißen Lichts (12), einem Bildsensor (15), einem Spektrometer (19) und einer Steuereinheit (6), welche eine Bildverarbeitungseinheit (60) aufweist, wobei das optische Mikroskop einen auf einer Verlagerungsplatine (11) angebrachten Probenträger (20) aufweist, wobei der Probenträger (20) dazu ausgelegt ist, eine Probe (200) aufzunehmen,
- wobei das System **dadurch gekennzeichnet ist, daß**
- es ein optisches System mit einem ringförmigen Spiegel (13) und einem Dunkelfeldmikroskopobjektiv (14) aufweist, wobei das optische System zwischen der Laserquelle (16), der Quelle weißen Lichts (12) und dem Probenträger (20) angeordnet ist, wobei das Dunkelfeldmikroskopobjektiv (14) einen Zentralbereich (144) und einen Randbereich (142) aufweist,
- der ringförmige Spiegel (13) dazu ausgelegt ist, einen Teil eines von der Quelle weißen Lichts in Richtung des Randbereichs (142) des Dunkelfeldmikroskopobjektivs (14) ausgesandten weißen Lichtstrahls (120) zu reflektieren und einen von der Laserquelle (16) ausgesandten Anregungslaserstrahl (160) in Richtung des Zentralbereichs (144) des Dunkelfeldmikroskopobjektivs (14) zu übertragen,
- das Dunkelfeldmikroskopobjektiv (14) dazu ausgelegt ist, den Teil des weißen Lichtstrahls mittels seines Randbereichs (142) in Richtung des Probenträgers (20) zu übertragen und den Anregungslaserstrahl (160) auf einen in dem ersten Bereich enthaltenen Meßpunkt zu fokussieren,
- das Dunkelfeldmikroskopobjektiv (14) dazu ausgelegt ist, den Teil des Lichtstrahls zu fokussieren, um einen ersten Bereich einer Probe (200) auf dem Probenträger (20) mit einem ringförmigen Beleuchtungskegel (124) zu beleuchten, und das Dunkelfeldmikroskopobjektiv (14) dazu ausgelegt ist, den Anregungslaserstrahl (160) auf einen in dem ersten Bereich enthaltenen Meßpunkt zu fokussieren,
- der Zentralbereich (144) des Dunkelfeldmikroskopobjektivs (14) dazu ausgelegt ist, ein Dunkelfeldmikroskopiebild auf einem in dem beleuchteten ersten Bereich enthaltenen Bildsichtbereich zu erfassen, wobei das Dunkelfeldmikroskopiebild mittels des Bildsensors (15) gespeichert wird,
- die Bildverarbeitungseinheit (60) dazu ausgelegt ist, eventuelle Mikropartikel (202) zu markieren und aus dem Dunkelfeldmikroskopiebild Koordinaten der den Mikropartikeln (202) zugeordneten Punkte auszulesen, um eine Liste von Punkten aufzustellen,
- die Verlagerungsplatine (11) dazu ausgelegt ist, den Probenträger (200) zu verlagern, um den Meßpunkt und einen Punkt der Liste von Punkten zusammenzubringen oder um den Bildsichtbereich des Dunkelfeldmikroskopobjektivs (14) auf einen mindestens teilweise anderen Bereich als dem ersten Bereich zu platzieren,
- der Zentralbereich (144) des Dunkelfeldmikroskopobjektivs (14) außerdem dazu ausgelegt ist, ein vom Meßpunkt aus erzeugtes Raman-Spektrum zu erfassen, wobei das Raman-Spektrum mittels eines Raman-Spektrometers (19) gespeichert wird.

## Claims

1. Method for spatial localization in an image and spectral analysis of microparticles (202) in a sample (200) by an optical microscopy system, the method comprising the following steps:
A) illumination (30, 50) of an area of the sample (200) using an annular illumination cone (124), the annular illumination cone (124) being produced by a beam of white light (120) partly reflected by an annular mirror (13) and focused by a peripheral region (142) of a dark-field microscope objective (14),
B) recording (31, 51) of a first dark-field microscopy image on an image field of view included in the illuminated sample area (200), the first dark-field image being collected by a central region (144) of the dark-field microscope objective (14),
C) identification (32, 52) in the first dark-field image of microparticles (202),
D) extraction (33, 53) of the coordinates of the points corresponding to microparticles (202) within the recorded dark-field image, so as to form a list of points,
E) displacement (34, 54) of the sample (200) so as to make an optical axis of the dark-field microscope objective (14) coincide with a point in the list of points,
F) illumination (35, 55) of a measurement point on the sample (200) using an excitation laser beam (160) transmitted through the annular mirror (13) and focused by the central region (144) of the dark-field microscope objective (14), the measurement point coinciding with the point in the point list,
G) collection (36, 56) of a Raman spectrum emitted from the measurement point, the Raman spectrum being collected by the central region (144) of the dark field microscope objective (14).

2. Method according to claim 1, wherein steps A) and F) are performed simultaneously, an area is illuminated on the sample (200) by the peripheral region (142) of the dark-field microscope objective (14), while a measurement point within the area is illuminated by the central region (144) of the dark-field microscope objective (14).

3. A method according to any one of claims 1 to 2, wherein a field of dimensions greater than the image field of view is reconstituted by a mosaic (4) of dark-field microscopy images, these dark-field microscopy images corresponding to tiles (40) of the mosaic (4).

4. Method according to claim 3, wherein a positioning of each tile (40) of the mosaic (4) is predefined upstream of the method.

5. A method according to claim 4, wherein steps E), F) and G) are repeated until all points of the extracted point list have been scanned on a given tile (40), before proceeding to a step of moving the sample (200) in order to center the field of view of the dark field microscope objective (14) on another tile (40) of the mosaic (4) and resuming the method from step A), in order to record another dark field microscopy image.

6. Method according to claim 5, wherein for each tile (40) of the mosaic (4), the list of points comprises a fixed number of points.

7. Method according to claim 3, wherein a positioning of at least one tile (40) of the mosaic (4) is established as a function of the coordinates of a point in the list of points.

8. A method according to claim 7, wherein after the displacement (54) of step E) to make the optical axis of the dark field microscope objective (14) coincide with a point in the point list, steps A), B), C), D), F), and G) are performed, a new dark field microscopy image, corresponding to a new tile (40) of the mosaic (4), and a Raman spectrum emitted from the measurement point, are recorded, these steps being followed by another displacement (54) of the sample (200) to make the optical axis of the dark field microscope objective (14) coincide with another point in the point list.

9. Method according to claim 8, wherein additional points extracted from the new dark-field microscopy image recorded after the move (54) of step E), are added to the list of points to be scanned.

10. A system for spatial tracking in an image and spectral analysis of microparticles (1) comprising an optical microscope, a laser source (16), a white light source (12), an image sensor (15), a spectrometer (19), and a control unit (6), the latter comprising an image processing unit (60), the optical microscope comprising a sample holder (20) mounted on a moving stage (11), the sample holder (20) being adapted to receive a sample (200),
- the system being **characterized in that** it comprises:
- an optical system comprising an annular mirror (13) and a dark-field microscope objective (14), the optical system being disposed between the laser source (16), the white light source (12) and the sample holder (20), the dark-field microscope objective (14) having a central region (144) and a peripheral region (142),
- the annular mirror (13) is configured to reflect part of a white light beam (120) emitted by the white light source towards the peripheral region (142) of the dark-field microscope objective (14), and to transmit an excitation laser beam (160) emitted by the laser source (16) towards the central region (144) of the dark-field microscope objective (14),
- the dark field microscope objective (14) is adapted to transmit the white light beam portion using its peripheral region (142) towards the sample holder (20) and to transmit the excitation laser beam (160) via its central region (144) towards the sample holder (20),
- the dark-field microscope objective (14) is adapted to focus the portion of the light beam to illuminate a first area of a sample (200) on the sample holder (20) using an annular illumination cone (124) and the dark-field microscope objective (14) is adapted to focus the excitation laser beam (160) on a measurement point within the first area,
- the central region (144) of the dark-field microscope objective (14) is adapted to collect a dark-field microscopy image over an image field of view included in the first illuminated area, the dark-field microscopy image being recorded using the image sensor (15),
- the image processing unit (60) is adapted to detect any microparticles (202) and to extract from the dark-field microscopy image the coordinates of the points associated with these microparticles (202), in order to establish a list of points,
- the displacement stage (11) is configured to move the sample holder (200), in order to make the measurement point coincide with a point in the point list or in order to place the image field of view of the dark field microscope objective (14) on another area at least partially different from the first area;
- the central region (144) of the dark field microscope objective (14) is also adapted to collect a Raman spectrum generated from the measurement point, the Raman spectrum being recorded by a Raman spectrometer (19).
